# EUROPEAN PATENT APPLICATION

(11) **EP 3 709 529 A1**
(43) Date of publication of application: **16.09.2020**
(21) Application number: 18875319.8
(22) Date of filing: 03.10.2018
(51) Int. Cl.: H04B 7/06, H04W 16/28, H04W 88/02

(54) **COMMUNICATION DEVICE, COMMUNICATION METHOD, AND PROGRAM**

(30) Priority: 10.11.2017 JP 2017216968
(71) Applicant: Sony Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2018/037022
(87) International publication number: WO 2019/093025

(57) **Abstract**

[Problem] To recover communication between a base station and a terminal device in a more suitable form.

[Solution] A communication device includes a communication unit that performs wireless communication, and a notification unit that notifies a base station of information on an available second beam in place of a first beam preferentially used in the wireless communication with the base station among a plurality of beams.

## Description

### Field

The present disclosure relates to a communication device, a communication method, and a program.

### Background

Wireless access schemes and wireless networks (hereinafter, referred to as "Long Term Evolution (LTE)", "LTE-Advanced (LTE-A)", "LTE-Advanced Pro (LTE-A Pro)", "New Radio (NR)", "New Radio Access Technology (NRAT)", "Evolved Universal Terrestrial Radio Access (EUTRA)" or "Further EUTRA (FEUTRA)") of cellular mobile communication have been studied in the third generation partnership project (3GPP). In the following description, the LTE includes LTE-A, LTE-A Pro, and EUTRA, and the NR includes NRAT and FEUTRA. In the LTE and the NR, a base station device (base station) is also called an evolved NodeB (eNodeB), and a terminal device (mobile station, mobile station device, and terminal) is also called user equipment (UE). The LTE and the NR are cellular communication systems in which a plurality of areas covered by a base station device are arranged in a cell shape. A single base station device may manage a plurality of cells.

In the fifth generation (5G) mobile communication system following the LTE/LTE-A, a technology using a directional beam for communication between a base station and a terminal device is being studied. By using the technology, it becomes possible to spatially multiplex communication between the base station and the terminal device in addition to multiplexing in time and frequency.

As a procedure for determining a more preferable beam to be used for the communication between the base station and the terminal device, for example, various beam candidates are provided from the base station to the terminal device, and information on each beam is reported from the terminal device to the base station. With such a procedure, the base station can specify a better beam based on the information on each beam reported from the terminal device.

### Citation List

### Non Patent Literature

Non Patent Literature 1: MediaTek Inc., "Discussion on Beam Recovery Mechanism" R1-1716214, 3GPP TSG RAN WG1 Meeting NR#3, Nagoya, Japan, 18th-21th September 2017

### Summary

### Technical Problem

On the other hand, obstacles such as a person or a vehicle intervene between the base station and the terminal device during the communication using the determined beam, and the beam is shielded due to the obstacles. As a result, it may be difficult to continue communication between the base station and the terminal device. The shielding of the beam due to the obstacles is also referred to as "blocking". In addition, the quality of the beam being used may be degraded due to interference from other beams. In such a case, it may be necessary to recover communication between the base station and the terminal device. For example, Non Patent Literature 1 discloses an example of beam management in a case where the communication between the base station and the terminal device is recovered due to blocking or deterioration of beam quality.

However, when the communication between the base station and the terminal device is recovered due to the blocking or the deterioration of the beam quality, a procedure of newly searching for a better beam may be necessary. When the procedure of newly searching for the beam may take a relatively long time, in such a case, it may be difficult to quickly recover the communication between the base station and the terminal device.

Therefore, the present disclosure proposes a technology that enables the communication between the base station and the terminal device to be recovered in a more suitable manner.

### Solution to Problem

According to the present disclosure, a communication device is provided that includes: a communication unit that performs wireless communication; and a notification unit that notifies a base station of information on an available second beam in place of a first beam preferentially used in the wireless communication with the base station among a plurality of beams.

Moreover, according to the present disclosure, a communication device is provided that includes: a communication unit that performs wireless communication; an acquisition unit that acquires, from the terminal device, information on an available second beam in place of a first beam preferentially used in the wireless communication with the terminal device among a plurality of beams; and a control unit that controls the wireless communication with the terminal device based on the acquired information on the second beam.

Moreover, according to the present disclosure, a communication method is provided that allows a computer to execute the following steps: performing wireless communication; and notifying a base station of information on an available second beam in place of a first beam preferentially used in the wireless communication with the base station among a plurality of beams.

Moreover, according to the present disclosure, a communication method is provided that allows a computer to execute the following steps: performing wireless communication; acquiring, from a terminal device, information on an available second beam in place of a first beam preferentially used in the wireless communication with the terminal device among a plurality of beams; and controlling the wireless communication with the terminal device based on the acquired information on the second beam.

Moreover, according to the present disclosure, a program is provided that allows a computer to execute the following operations: performing wireless communication; and notifying a base station of information on an available second beam in place of a first beam preferentially used in the wireless communication with the base station among a plurality of beams.

Moreover, according to the present disclosure, a program is provided that allows a computer to execute the following operations: performing wireless communication; acquiring, from a terminal device, information on an available second beam in place of a first beam preferentially used in the wireless communication with the terminal device among a plurality of beams; and controlling the wireless communication with the terminal device based on the acquired information on the second beam.

### Advantageous Effects of Invention

According to the present disclosure as described above, it is possible to provide the technology that enables the communication between the base station and the terminal device to be recovered in a more suitable manner.

It is noted that the above effects are not necessarily limited, and, along with or instead of the above effects, any of the effects described in the present specification or other effects which can be understood from the present specification may be exhibited.

### Brief Description of Drawings

FIG. 1 is an explanatory diagram for describing an example of a schematic configuration of a system according to an embodiment of the present disclosure.
FIG. 2 is a block diagram illustrating an example of a configuration of a base station according to the present embodiment.
FIG. 3 is a block diagram illustrating an example of a configuration of a terminal device according to the present embodiment.
FIG. 4 is an example of a base station in a case where all weights of antennas are configured by a digital circuit in beamforming.
FIG. 5 is an example of a base station in case of including a phase shifter of an analogue circuit in the beamforming.
FIG. 6 is an explanatory diagram illustrating an example of beam sweeping using a rough beam.
FIG. 7 is an explanatory diagram illustrating an example of beam sweeping using an accurate beam.
FIG. 8 is an explanatory diagram illustrating an example of the beam sweeping using the rough beam.
FIG. 9 is an explanatory diagram illustrating an example in which an accurate beam is bundled to form the rough beam.
FIG. 10 is an explanatory diagram illustrating an example in a case where a plurality of base stations exist around a terminal.
FIG. 11 is an explanatory diagram illustrating an example of a DL beam sweeping procedure performed by the base station and the terminal.
FIG. 12 is a sequence diagram illustrating an example of a flow of a series of processing of a communication system according to the present embodiment.
FIG. 13 is a sequence diagram illustrating an example of a flow of a series of processing of a communication system according to Modification 1.
FIG. 14 is an explanatory diagram for describing an overview of a communication system according to Modification 2.
FIG. 15 is a sequence diagram illustrating an example of a flow of a series of processing of the communication system according to Modification 2.
FIG. 16 is an explanatory diagram for describing an example of a blocking situation.
FIG. 17 is an explanatory diagram for describing another example of the blocking situation.
FIG. 18 is an explanatory diagram for an example of a beam selected according to the blocking situation.
FIG. 19 is an explanatory diagram for an example of the beam selected according to the blocking situation.
FIG. 20 is a sequence diagram illustrating an example of a flow of a series of processing of a communication system according to Modification 3.
FIG. 21 is an explanatory diagram for describing an overview of a partial band in 5G.
FIG. 22 is a sequence diagram illustrating an example of a flow of a series of processing of a communication system according to Modification 4.
FIG. 23 is a sequence diagram illustrating an example of a flow of a series of processing of a communication system according to Modification 5.
FIG. 24 is a sequence diagram illustrating an example of a flow of a series of processing of a communication system according to Modification 6.
FIG. 25 is a block diagram illustrating a first example of a schematic configuration of an eNB.
FIG. 26 is a block diagram illustrating a second example of the schematic configuration of the eNB.
FIG. 27 is a block diagram illustrating an example of a schematic configuration of a smartphone.
FIG. 28 is a block diagram illustrating an example of a schematic configuration of a car navigation device.

### Description of Embodiments

Hereinafter, preferred embodiments of the present disclosure will be described in detail with reference to the accompanying drawings. Note that in the present specification and drawings, components having substantially the same functional configuration will be denoted by the same reference numerals and a redundant description thereof will be omitted.

Note that descriptions will be made in the following order.
1. Configuration example
   1.1. Example of system configuration
   1.2. Configuration example of base station
   1.3. Configuration example of terminal device
2. Details
3. Technical features
4. Application example
   4.1. Application example for base station
   4.2. Application example for terminal device
5. Conclusion

### <<1. Configuration example>>

### <1.1. Example of system configuration>

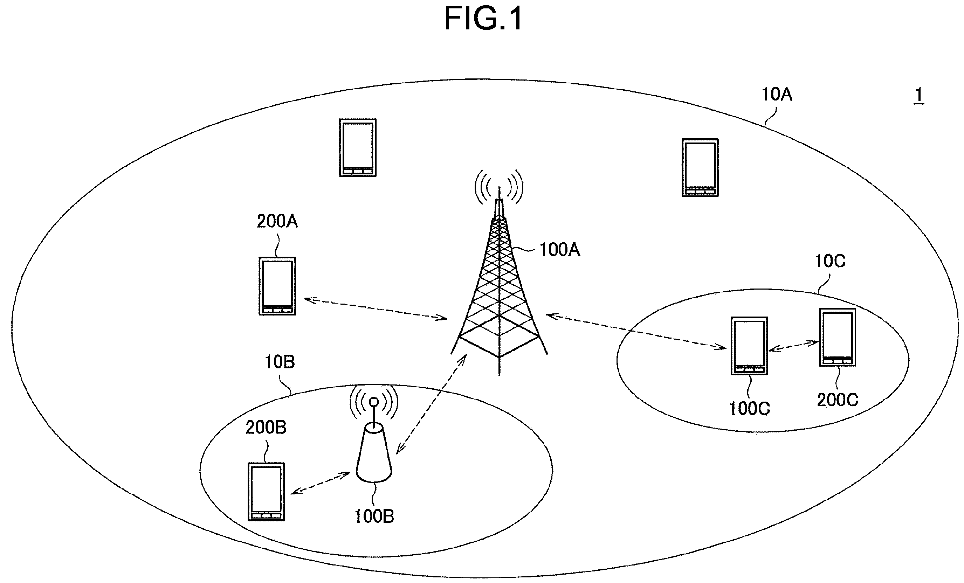

First, an example of a schematic configuration of a system 1 according to an embodiment of the present disclosure will be described with reference to FIG. 1. FIG. 1 is an explanatory diagram for describing an example of a schematic configuration of a system 1 according to an embodiment of the present disclosure. As illustrated in FIG. 1, the system 1 includes a wireless communication device 100 and a terminal device 200. Here, the terminal device 200 is also called a user. The user may also be called UE. A wireless communication device 100C is also called UE-Relay. Here, the UE may be UE defined in LTE or LTE-A, and the UE-Relay may be a Prose UE to network relay discussed in 3GPP, and more generally, may mean communication equipment.

### (1) Wireless communication device 100

The wireless communication device 100 is a device that provides a wireless communication service to a subordinate device. For example, a wireless communication device 100A is a base station of a cellular system (or a mobile communication system). The base station 100A performs wireless communication with a device (for example, terminal device 200A) located inside a cell 10A of the base station 100A. For example, the base station 100A transmits a downlink signal to the terminal device 200A and receives an uplink signal from the terminal device 200A.

The base station 100A is logically connected to other base stations by, for example, an X2 interface, and can transmit and receive control information and the like. In addition, the base station 100A is logically connected to a so-called core network (not illustrated) by, for example, an S1 interface, and can transmit and receive the control information and the like. Note that the communication between these devices can be physically relayed by various devices.

Here, the wireless communication device 100A illustrated in FIG. 1 is a macrocell base station, and the cell 10A is a macrocell. On the other hand, wireless communication devices 100B and 100C are master devices that operate small cells 10B and 10C, respectively. As an example, the master device 100B is a small cell base station that is fixedly installed. The small cell base station 100B establishes a wireless backhaul link with the macro cell base station 100A, and establishes an access link with one or more terminal devices (for example, terminal device 200B), respectively, in the small cell 10B. Note that the wireless communication device 100B may be a relay node defined by 3GPP. The master device 100C is a dynamic AP (access point). The dynamic AP 100C is a mobile device that dynamically operates the small cell 10C. The dynamic AP 100C establishes a wireless backhaul link with the macro cell base station 100A, and establishes an access link with one or more terminal devices (for example, terminal device 200C), respectively, in the small cell 10C. The dynamic AP 100C may be, for example, a terminal device equipped with hardware or software operable as a base station or a wireless access point. In this case, the small cell 10C is a dynamically formed localized network (localized network/virtual cell).

The cell 10A may be operated according to any wireless communication scheme such as LTE, LTE-Advanced (LTE-A), LTE-Advanced PRO, GSM (registered trademark), UMTS, W-CDMA, CDMA2000, WiMAX, WiMAX2, or IEEE802.16.

Note that a small cell is a concept that can include various types of cells (for example, femtocells, nanocells, picocells, microcells, and the like) that are arranged to overlap or do not overlap with a macrocell and are smaller than the macrocell. In one example, the small cell is operated by a dedicated base station. In another example, the small cell is operated by allowing a terminal serving as a master device to temporarily operate as a small cell base station. A so-called relay node can also be considered as a form of the small cell base station. A wireless communication device functioning as a master station of the relay node is also called a donor base station. The donor base station may mean DeNB in LTE, or may more generally mean the master station of the relay node.

### (2) Terminal device 200

The terminal device 200 can communicate in a cellular system (or a mobile communication system). The terminal device 200 performs wireless communication with the wireless communication device (for example, base station 100A, and master device 100B or 100C) of the cellular system. For example, the terminal device 200A receives a downlink signal from the base station 100A and transmits an uplink signal to the base station 100A.

In addition, as the terminal device 200, a so-called UE only is not adopted, but a so-called low cost UE such as an MTC terminal, an Enhanced MTC (eMTC) terminal, and an NB-IoT terminal may be adopted.

### (3) Supplement

Hereinabove, the schematic configuration of the system 1 has been described above, but the present technology is not limited to the example illustrated in FIG. 1. For example, as a configuration of the system 1, a configuration not including the master device, small cell enhancement (SCE), a heterogeneous network (HetNet), an MTC network, or the like can be adopted. In addition, as another example of the configuration of the system 1, the master device may be connected to the small cell, and the cell may be constructed under the small cell.

### <1.2. Configuration example of base station>

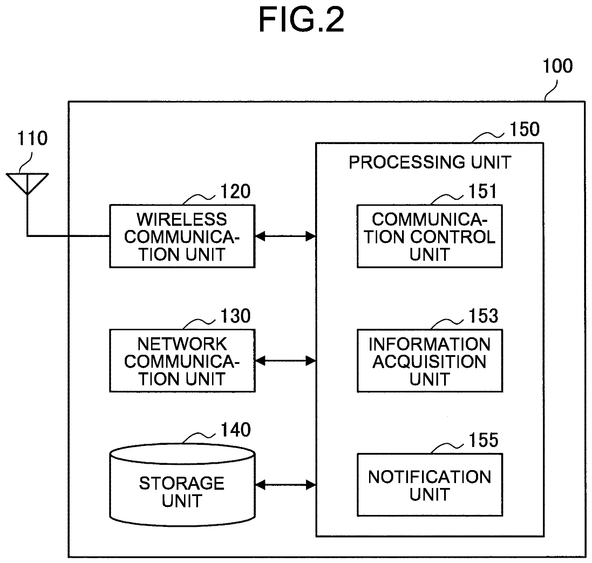

Next, the configuration of the base station 100 according to an embodiment of the present disclosure will be described with reference to FIG. 2. FIG. 2 is a block diagram illustrating an example of the configuration of the base station 100 according to an embodiment of the present disclosure. Referring to FIG. 2, the base station 100 includes an antenna unit 110, a wireless communication unit 120, a network communication unit 130, a storage unit 140, and a processing unit 150.

### (1) Antenna unit 110

The antenna unit 110 radiates a signal output from the wireless communication unit 120 to space as a radio wave. Further, the antenna unit 110 converts the radio wave in the space into a signal and outputs the signal to the wireless communication unit 120.

### (2) Wireless communication unit 120

The wireless communication unit 120 transmits and receives a signal. For example, the wireless communication unit 120 transmits a downlink signal to the terminal device and receives an uplink signal from the terminal device.

### (3) Network communication unit 130

The network communication unit 130 transmits and receives information. For example, the network communication unit 130 transmits information to other nodes and receives information from other nodes. For example, the other nodes include other base stations and core network nodes.

As described above, in the system 1 according to the present embodiment, the terminal device may operate as a relay terminal and may relay communication between a remote terminal and the base station. In such a case, for example, the wireless communication device 100C corresponding to the relay terminal may not include the network communication unit 130.

### (4) Storage unit 140

The storage unit 140 temporarily or permanently stores a program and various data for the operation of the base station 100.

### (5) Processing unit 150

The processing unit 150 provides various functions of the base station 100. The processing unit 150 includes a communication control unit 151, an information acquisition unit 153, and a notification unit 155. Note that the processing unit 150 may further include other components other than these components. That is, the processing unit 150 can perform operations other than the operations of these components.

Operations of the communication control unit 151, the information acquisition unit 153, and the notification unit 155 will be described later in detail.

### <1.3. Configuration example of terminal device>

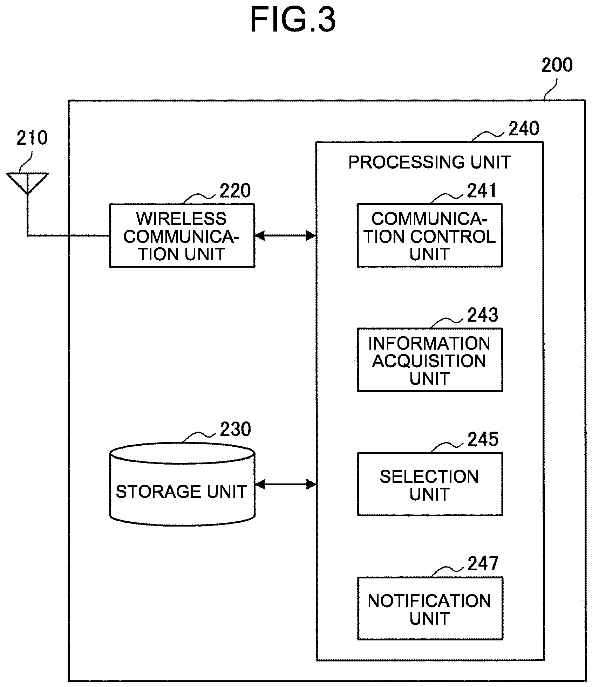

Next, an example of the configuration of the terminal device 200 according to an embodiment of the present disclosure will be described with reference to FIG. 3. FIG. 3 is a block diagram illustrating an example of the configuration of the terminal device 200 according to the embodiment of the present disclosure. As illustrated in FIG. 3, the terminal device 200 includes an antenna unit 210, a wireless communication unit 220, a storage unit 230, and a processing unit 240.

### (1) Antenna unit 210

The antenna unit 210 radiates a signal output from the wireless communication unit 220 to space as a radio wave. Further, the antenna unit 210 converts the radio wave in the space into a signal and outputs the signal to the wireless communication unit 220.

### (2) Wireless communication unit 220

The wireless communication unit 220 transmits and receives a signal. For example, the wireless communication unit 220 receives a downlink signal from the base station and transmits an uplink signal to the base station.

In addition, as described above, in the system 1 according to the present embodiment, the terminal device may operate as a relay terminal and may relay communication between a remote terminal and the base station. In such a case, for example, the wireless communication unit 220 in the terminal device 200C operating as a remote terminal may transmit and receive a side link signal to and from a relay terminal.

### (3) Storage unit 230

The storage unit 230 temporarily or permanently stores a program and various data for the operation of the terminal device 200.

### (4) Processing unit 240

The processing unit 240 provides various functions of the terminal device 200. For example, the processing unit 240 includes a communication control unit 241, an information acquisition unit 243, a selection unit 245, and a notification unit 247. Note that the processing unit 240 may further include other components other than these components. That is, the processing unit 240 can perform operations other than the operations of these components.

Operations of the communication control unit 241, the information acquisition unit 243, the selection unit 245, and the notification unit 247 will be described later in detail.

### <<2. Details>>

Subsequently, in describing the embodiment of the present disclosure in detail, first, details leading to the embodiment of the present disclosure will be described.

### (Codebook based beam)

Future wireless communication systems (5G), which are being studied in 3GPP, are unlikely to be a structure that changes beams radiated from the base station steplessly and regenerates a beam following the terminal device. This is because there is a calculation cost for regenerating a new beam. 3GPP Rel13's FD-MIMO also adopts a method for generating beams in all directions from the base station in advance, and for selecting and providing beams necessary for the terminal device from the beams generated in advance. Such a beam is called codebook based beamforming. If beams are prepared in increments of 1° at an angle of 360° in a horizontal direction, 360 types of beams are required. When the beams overlap each other by half, if 720 beams, which are twice the 360 beams, are prepared, these 720 beams are sufficient as a horizontal codebook based beam. Furthermore, when beams are prepared in increments of 1° increment of 180° in the vertical direction so that the beams overlap each other by half, the horizontal direction is set to 0°, 360 beams can be prepared for 180° from -90° to +90°.

### (Necessity of beam association)

The base station can be equipped with a very large number of antenna elements, such as 256 (frequency band is 30 GHz) and 1,000 (frequency band is 70 GHz) antenna elements. Thus, as the number of antenna elements increases, it becomes possible to generate a very sharp beam when performing beamforming processing using the antenna. For example, it becomes possible to provide a very sharp beam with a half bandwidth (indicating how often a level at which a gain drops by 3 dB occurs) of 1° or less from the base station to the terminal device.

In order to communicate between the base station and the terminal device, it is necessary to determine which beam the base station uses. In the case of the downlink (DL) communication, it is necessary to determine a DL beam provided from the base station. In addition, in the case of uplink (UL) communication, it is necessary for the base station to determine a UL beam to be used for reception. The latter UL beam means that instead of the base station transmitting the radio wave, directivity of an antenna for the base station to receive the radio wave is a beam.

### (Beam sweeping)

By sweeping (beam sweeping) a plurality of beam candidates from the base station, the terminal device that is observing the beam candidates can determine which beam the base station uses and which beam the terminal device is easier to receive. On the other hand, when the terminal device transmits a UL reference signal (RS) and the base station receives the RS while performing the beam sweeping, the base station can determine a reception beam that is optimal for receiving the signal from the terminal device.

### (Resource for performing beamforming)

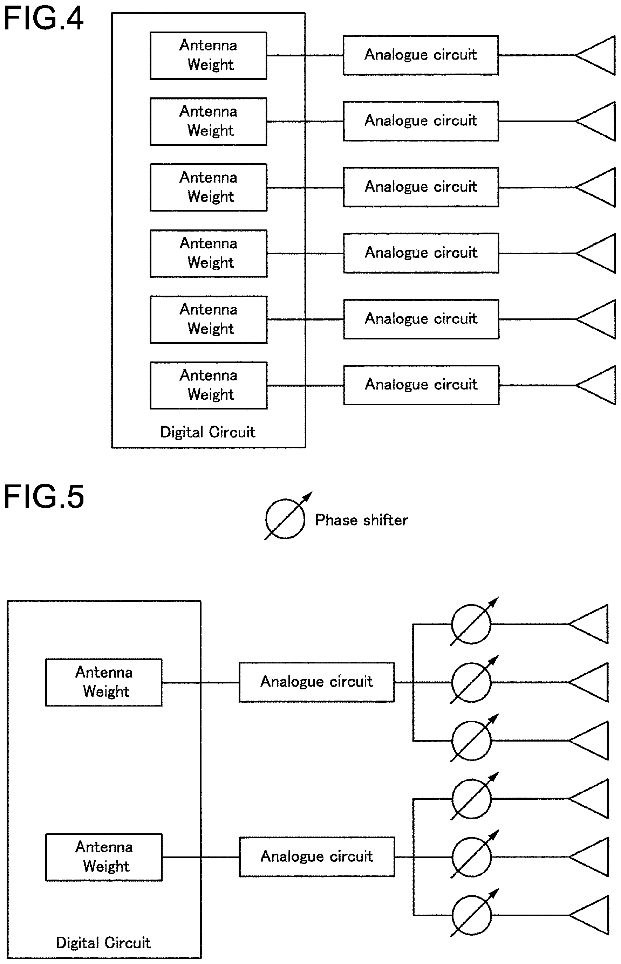

FIG. 4 is an example of a base station in a case where all weights of antennas are configured by a digital circuit in beamforming. Such a case where all weights of the antennas are configured by the digital circuit in the beamforming is called a full digital antenna architecture. In the case of the full digital, when transmission sweeping (Tx sweeping) is performed, different resources are required as many as the number of beams. On the other hand, when reception sweeping (Rx sweeping) is performed, it is possible to simultaneously receive all beams within one resource. Therefore, the full digital antenna architecture can reduce resources at the time of reception sweeping. That is, when the base station performs the reception sweeping of the full digital, the terminal device only needs to transmit a UL resource signal (RS) corresponding to one resource, so power consumption is reduced. Here, the resource is an orthogonal resource using frequency or time. For example, an LTE resource block or a resource element correspond to a resource referred herein.

FIG. 5 is an example of a base station in the case of including a phase shifter of an analogue circuit in the beamforming. The case where the beamforming is implemented with the phase shifter of the analogue circuit called a hybrid antenna architecture of digital and analog. The digital and analog hybrid antenna architecture of FIG. 5 is advantageous in terms of cost because the digital circuit has less hardware. However, in this hybrid antenna architecture, the phase shifter connected to the antenna can express only a unidirectional beam, so both the transmission sweeping and the reception sweeping require resources as many as the number of beams. This means that the terminal device needs to transmit UL RS for all resources corresponding to the number of beams for the reception sweeping of the base station. That is, the power consumption of the terminal device becomes significant.

Considering the actual usage situation, it is assumed that the hybrid architecture illustrated in FIG. 5 will be used, and therefore, it is important how to overcome the shortcomings of the hybrid architecture in which different beams require resources of different frequencies or time.

### (Efficiency of beam sweeping)

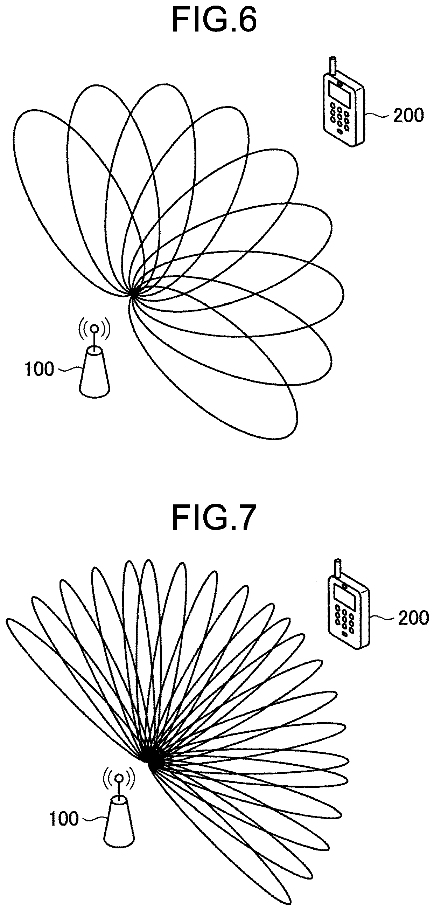

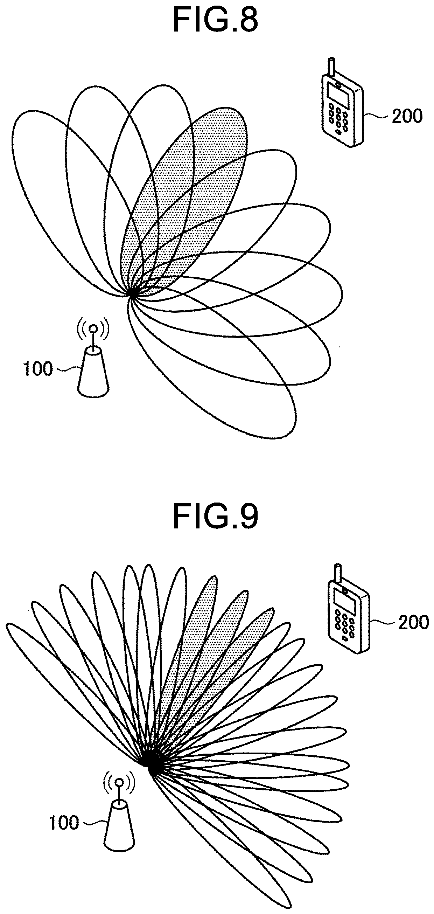

When the beam is prepared in increments of 1° with respect to a direction of 360° in a horizontal direction, the beam sweeping is performed using 360 resources, and each beam is evaluated one by one, and therefore, a lot of time and more resources are required, and furthermore, the power consumption of the terminal device increases. Therefore, a technology is considered in which the base station generates a rough beam of 10°, uses 36 resources, finds a beam having optimal resolution from beams of 10°, and then, performs beam sweeping using a fine beam (accurate beam) in increments of 1° within the range of 10° to find an optimal beam. In this case, the base station can determine the optimal beam by using resources of 36 + 10 = 46, and as a result, can greatly reduce resources from 360 to 46. FIG. 6 is an explanatory diagram illustrating an example of the beam sweeping using the rough beam. In addition, FIG. 7 is an explanatory diagram illustrating an example of the beam sweeping using the accurate beam. The base station may bundle a plurality of accurate beams and use the accurate beams simultaneously to treat a plurality of accurate beams as the rough beams. In this case, for example, by using a plurality of adjacent accurate beams (for example, three) at the same time, the beams are used as the rough beams. The base station may bundle and provide three accurate beams as illustrated in FIG. 9 to generate the rough beam illustrated in FIG. 8. By transmitting the three beams of FIG. 9 at the same time and at the same frequency, a rough beam similar to that of FIG. 8 can be provided.

### (Beam sweeping from a plurality of base stations)

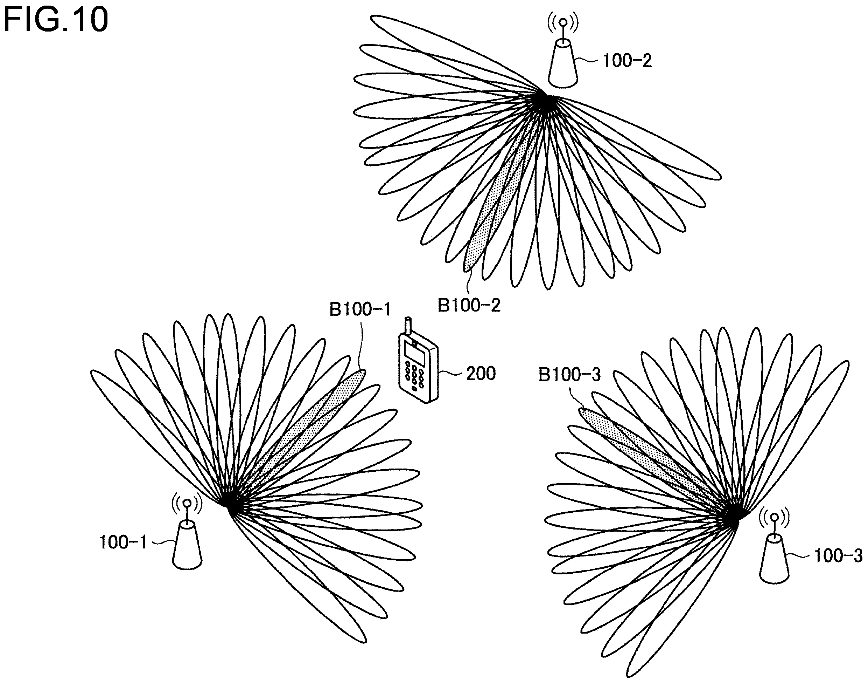

When there are a plurality of base stations around the terminal device, it is necessary to determine the transmission beams and reception beams of the plurality of base stations for the terminal device. FIG. 10 is an explanatory diagram illustrating an example in a case where a plurality of base stations exist around a terminal device. In the example illustrated in FIG. 10, the optimal beam for the terminal device 200 is a beam B100-1 at base station 100-1, a beam B100-2 at a base station 100-2, and a beam B100-3 at a base station 100-3. A method for determining an optimal beam based on information from the terminal device 200, and finally, determining a base station closest to the terminal device 200 or a main base station among the plurality of base stations 100-1 to 100-3, and instructing other base stations is considered. In this case, one base station needs to determine the transmission beams and reception beams of the plurality of base stations, and as a result, the load on the terminal device increases.

### (Channel reciprocity)

Channel reciprocity means that a UL channel and a DL channel between the base station and the terminal device are the same. In a time division duplex (TDD) system, frequency bands used for UL and DL are the same, and therefore, basically, the channel reciprocity of the UL and DL is established. However, it is necessary to establish the reciprocity in both the analogue circuit of the terminal device and a spatial channel by performing an operation of calibration so that the TX/RX of the base station and the analogue circuit of the terminal device have the same characteristics.

If this channel reciprocity is established, when the terminal device selects the DL beam of the base station, the terminal device informs the base station of numbers of beams, so the UL beam to be used by the base station can be determined without operating the reception sweeping. When the combination of the rough beam and the accurate beam described above (efficiency of beam sweeping) is performed, the following is obtained.

### (DL beam sweeping procedure)

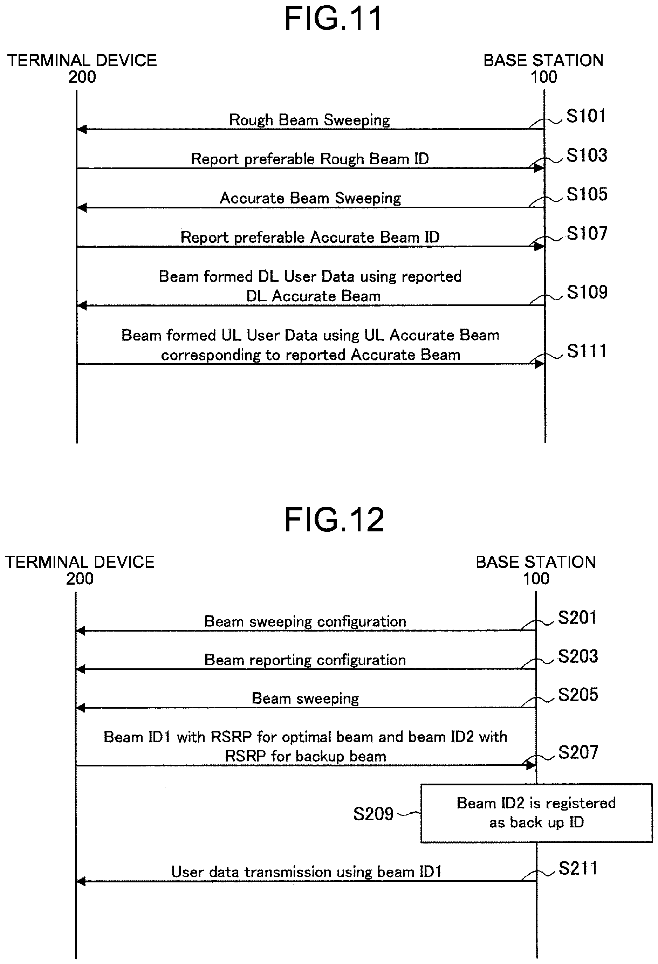

FIG. 11 is an explanatory diagram illustrating an example of a DL beam sweeping procedure performed by the base station 100 and the terminal device 200. First, the transmission sweeping using the rough beam is performed from the base station to the terminal device (step S101). This transmission sweeping is performed according to a sweeping pattern unique to the base station 100. In other words, the transmission sweeping is also called base station-specific or cell specific.

The terminal device 200 reports numbers of preferable rough beams for an own device to the base station 100 (step S103). The terminal device 200 determines the preferable rough beam based on, for example, whether or not the beam has the largest received power when determining the preferable rough beam.

When receiving a report of numbers of rough beams from the terminal device 200, the base station 100 performs the transmission sweeping using the accurate beam corresponding to the rough beam (step S105). The transmission sweeping at this time may be a sweeping pattern unique to the terminal device 200 specially prepared for the terminal device 200. Alternatively, the sweeping pattern is prepared in common for all terminal devices 200, but the base station 100 may notify each terminal device 200 which part to monitor. In the former case, the transmission sweeping pattern itself is unique (UE specific) to the terminal device 200. In the latter case, it can be said that the setting of the transmission sweeping pattern is unique (UE specific) to the terminal device 200.

The terminal device 200 reports numbers of preferable accurate beams for an own device to the base station 100 (step S107). The terminal device 200 determines the preferable accurate beam based on, for example, whether or not the beam has the largest received power when determining the preferable accurate beam.

When receiving a report of numbers of accurate beams from the terminal device 200, the base station 100 transmits the DL user data to the terminal device 200 using the accurate beam (step S109). Note that when the channel reciprocity is secured, the base station 100 receives the UL user data from the terminal device 200 using the same accurate beam as the accurate beam at the time of transmission for reception from the terminal device 200 (step S111).

Note that a beam setting method may be appropriately changed according to system application conditions and use cases. As a specific example, the rough beam may be set commonly to a cell or a base station and shared by a plurality of terminal devices. In this case, each terminal device may monitor the rough beam. In addition, the accurate beam may be customized and provided for each terminal device. Further, as another example, a common accurate beam may be provided to a plurality of terminal devices. In this case, it is possible to provide necessary beams for each terminal device by specifying which beam is monitored for each terminal device.

### (Channel state information (CSI) acquisition)

When the above beam sweeping procedure is completed, the optimal transmission beam on the base station to be used between the base station and the terminal device can be determined. DL CQI acquisition is to grasp the channel quality and the interference situation when using the determined transmission beam. The DL CQI acquisition is required to notify whether the base station to perform DL data transmission based on which modulation scheme or coding rate is used on the terminal device from the terminal device to the base station with feedback using the UL, which is channel quality indicator (CQI) feedback. To perform this feedback, the base station transmits a DL reference signal from the base station to the terminal device for DL CSI acquisition, receives the DL reference signal for the DL CSI acquisition, and evaluates the channel situations. By doing so, the terminal device can determine a desired CQI (combination of modulation scheme and individual coding rate).

As described above, first, the preferable transmission beam is determined on the base station by the beam sweeping procedure, the CQI is determined on the terminal device in the CSI acquisition procedure, and it is necessary to notify the determined CSI from the terminal device to the base station with the CSI feedback.

### (Beam recovery)

In the present disclosure, beam recovery refers to finding and using another new beam because the beam between the base station and the terminal device is not used for some reason. The reasons why the beam recovery is necessary are generally as follows.

### (Reason 1) Blocking

This is a state in which obstacles such as cars and people enter between the base station and the terminal device, and thus beams from the base station are not reached, and control signals or user data difficult to communicate between the base station and the terminal device.

### (Reason 2) Interference

This is a state in which a signal from another base station or another terminal device becomes interference and it becomes difficult to transmit and receive a target signal between the base station and the terminal device.

The blocking is a complete loss of signal, and it is difficult to return the communication on the same beam unless the obstacles, such as cars and people, intervene. Even if the frequency at which the base station transmits data is slightly changed, beams are highly likely to be transmitted and received using the direction of the obstacles in all neighboring frequency bands. Even in the time direction, communication is highly likely to be difficult for few seconds until obstacles do not intervene.

On the other hand, the interference does not always occur in all time and frequency resources. Therefore, the interference does not occur when another base station or another terminal device stops transmission. In LTE, the control signal or the user data is provided by one beam. Unlike this, in 5G, the control signal or the user data can be transmitted and received using a plurality of beams, so it is necessary to improve resistance to interference considering the characteristics.

On the other hand, in the case of the blocking, the base station is basically required to change the beam. In changing the beam, it is necessary to return quickly, that is, to identify a new beam as soon as possible. This is because, depending on the application, beam communication may be used for vehicle control, drone control, remote medical device control, and the like that require continuous low-latency communication.

### (Target for recovery)

Various things can be considered as targets for recovery. What is considered to be the targets to be recovered is listed below.

### (1) Physical Downlink Control Channel (PDCCH)

PDCCH is a channel on which a downlink control signal is transmitted, and has higher importance than user data. Therefore, it is preferable to quickly recover from the situation where the terminal device cannot receive the control signal.

### (2) Physical Downlink Shared Channel (PDSCH)

PDSCH is a channel on which downlink user data is transmitted. In many cases, the terminal device cannot receive the user data itself. For example, the terminal device may not be able to temporarily receive the user data due to interference. Normally, when the terminal device cannot receive the user data, the terminal device returns NACK to the base station to notify that the terminal device cannot receive the user data, and retransmits the same data.

### (3) Physical Uplink Control Channel (PUCCH)

PUSCH is a channel transmitted by an uplink control signal, and has the same importance as a downlink control signal.

### (4) Physical Uplink Shared Channel (PUSCH)

PDSCH is a channel on which uplink user data is transmitted.

### (5) Beam

This is a beam used between the base station and the terminal device. The base station determines a beam, and then performs uplink and downlink transmission and reception using the beam. Therefore, if the used beam itself is not used, the base station needs to find a new suitable beam quickly. After all, a beam needs to be first recovered. This is because it is difficult to recover only the PDCCH without recovering the beam. That is, it is the most important to recover the beam among five listed here.

### (Recovery environment)

Basically, many cases where the base station provides a plurality of beams as recovery environment are considered. This is because if there is another beam when the blocking occurs, there are few situations where the communication between the base station and the terminal device will be completely interrupted. However, the base station cannot always use a plurality of beams, and a case where communication is performed using only one beam is also considered. In such a case, the base station needs to find a new suitable beam quickly.

In view of the above situation, the present disclosure proposes an example of a technology that can quickly recover the communication between the base station and the terminal device even when the blocking, the deterioration in the beam quality, or the like occurs. Specifically, the present disclosure proposes an example of a technology that can quickly find a new beam link in a beam recovery procedure.

### <<3. Technical features>>

Hereinafter, technical features of the communication system according to the embodiment of the present disclosure will be described.

### (Basic configuration)

When the downlink beam (DL beam) in use between the base station and the terminal device is lost due to the blocking, it is necessary to find a new DL beam. In the method in which the base station performs the beam sweeping again and then the terminal device finds a more suitable beam and feeds back the beam to the base station, it may take time for the beam sweeping. Therefore, it may be difficult to quickly find a new beam with such a method.

On the other hand, in the beam report for normal beam sweeping, the terminal device reports candidates of a beam for backup in addition to candidates of the beam (optimal beam) to be used for communication with the base station (optimal beam), and thus can give redundancy in beam selection. However, simply by reporting only K (K is an integer of 2 or more) beams, the base station is difficult to identify a beam (that is, beam that the terminal device wants to use for communication with the base station) mainly used for communication with the terminal device and a beam notified for backup.

In view of such a situation, in the system according to an embodiment of the present disclosure, when performing the beam reporting to the base station 100, the terminal device 200 specifies and reports the beam for backup. In other words, the terminal device 200 distinguishes the beam for backup from the candidates of the beam to be used for communication with the base station and reports the beam. The beam for backup corresponds to, for example, a beam that can be used in place of a beam (for example, a beam that the terminal device wants to use) preferentially used for communication between the base station 100 and the terminal device 200. Note that a method of specifying a beam for backup is not particularly limited. That is, the beam for backup may be specified explicitly (Explicit) or implicitly (Implicit).

Here, an example of the flow of a series of processing of the communication system according to the present embodiment, in particular, an example of the flow of processing related to the beam reporting from the terminal device 200 to the base station 100, will be described with reference to FIG. 12. FIG. 12 is a sequence diagram illustrating an example of the flow of a series of processing of the communication system according to the present embodiment.

As illustrated in FIG. 12, the base station 100 (notification unit 155) notifies the terminal device 200 located within its own communication range (within a cell) of information on the beam sweeping configuration (S201). Further, the base station 100 (notification unit 155) notifies the terminal device 200 of the information on the beam reporting configuration (S203). Then, the base station 100 (communication control unit 151) performs the beam sweeping (S205). Specifically, the base station 100 radiates a beam in a time division manner in each of a plurality of directions.

The terminal device 200 (communication control unit 241) receives a beam transmitted by the base station 100 in each of a plurality of directions in a time-division manner based on the information notified from the base station 100. The terminal device 200 (selection unit 245) measures the quality of each beam (for example, reference signal received power (RSRP)), and the beam (hereinafter, referred to as a main beam) preferentially used for communication with the base station 100 and the beam for backup (hereinafter, also referred to as a "back up beam") that can be used in place of the beam are selected based on the measurement result. Then, the terminal device 200 (notification unit 247) notifies (that is, perform the beam reporting) the base station 100 of information on each of the selected main beam (that is, the beam that the terminal device 200 wants to use) and the back up beam. As a specific example, the terminal device 200 associates information (for example, RSRP measurement result) corresponding to the measurement result of the beam with IDs of each of the selected main beam and the back up beam, and then notifies the base station 100 of the IDs (S207). In this description, it is assumed that the beam associated with ID1 is selected as the main beam, and the beam associated with ID2 is selected as the back up beam.

The base station 100 (information acquisition unit 243) acquires, from the terminal device 200, a notification (report) on the main beam and the back up beam selected by the terminal device 200. The base station 100 (communication control unit 151) registers the ID2 as a back up beam ID based on the notification from the terminal device 200 (S209). Then, the base station 100 (communication control unit 151) transmits the user data to the terminal device 200 using the beam associated with the ID1 (S211).

When it is difficult to perform the communication between the base station 100 and the terminal device 200 using the main beam (that is, the beam associated with the ID1), the beam (that is, the beam associated with the ID2) registered as the back up beam is used for the communication in place of the main beam. As a result, even when it is difficult to perform the communication using the main beam, the base station 100 can continue the communication using the registered back up beam without performing the beam sweeping again. Note that the main beam corresponds to an example of a "first beam", and the back up beam corresponds to an example of a "second beam".

Hereinabove, the basic configuration of the communication system according to the present embodiment has been described with reference to FIG. 12.

### (Modification 1)

Next, a modification of the communication system according to the embodiment of the present disclosure will be described. Hereinafter, the present modification is also referred to as "Modification 1".

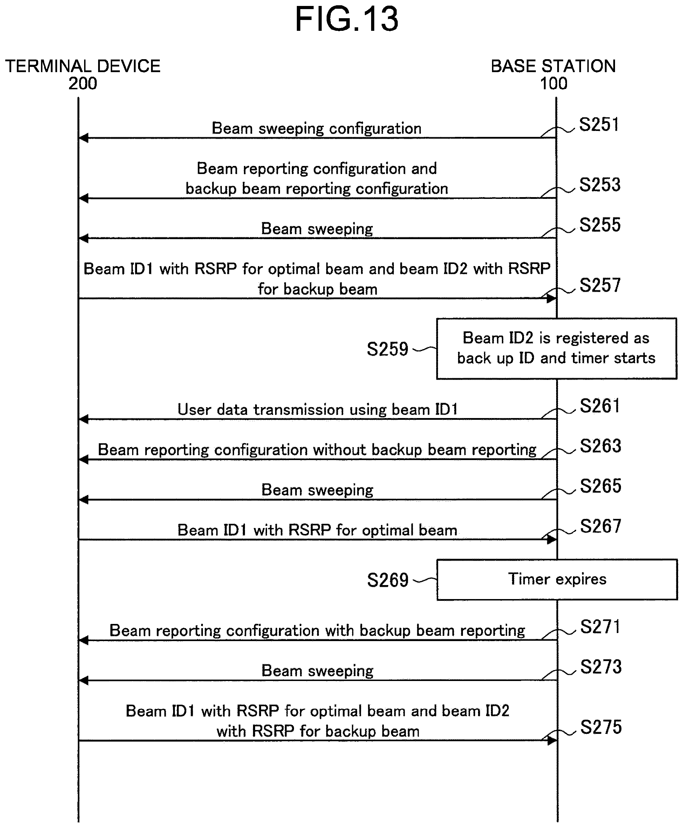

In the present modification, an example of a case where the base station 100 instructs the terminal device 200 to report the back up beam will be described. Specifically, when receiving an instruction from the base station 100, the terminal device 200 notifies (report) the information on the back up beam to the base station 100. For example, FIG. 13 is a sequence diagram illustrating an example of a flow of a series of processing of a communication system according to Modification 1. Specifically, FIG. 13 illustrates an example of a case where the base station 100 selectively controls whether or not to notify the terminal device 200 of the information on the back up beam based on timer control.

As illustrated in FIG. 13, the base station 100 (notification unit 155) notifies the terminal device 200 located within its own communication range (within a cell) of information on the beam sweeping configuration (S251). Further, the base station 100 (notification unit 155) notifies the terminal device 200 of the information on the beam reporting configuration and the information on the back up beam reporting configuration, respectively (S253). Then, the base station 100 (communication control unit 151) performs the beam sweeping (S255). Specifically, the base station 100 radiates a beam in a time division manner in each of a plurality of directions.

The terminal device 200 (communication control unit 241) receives a beam transmitted by the base station 100 in each of a plurality of directions in a time-division manner based on the information notified from the base station 100. The terminal device 200 (selection unit 245) measures qualities (for example, RSRP) of each beam, and selects the main beam and the back up beam according to the measurement result. The terminal device 200 associates the information (for example, RSRP measurement result) corresponding to the measurement result of the quality of the beam with the IDs of each of the selected main beam and the back up beam, and then notifies the base station 100 of the IDs (S257). In this description, it is assumed that the beam associated with ID1 is selected as the main beam, and the beam associated with ID2 is selected as the back up beam.

The base station 100 (information acquisition unit 243) acquires, from the terminal device 200, a notification (report) on the main beam and the back up beam selected by the terminal device 200. The base station 100 (communication control unit 151) registers the ID2 as the back up beam ID based on the notification from the terminal device 200, and starts a timer (S259). Then, the base station 100 (communication control unit 151) transmits the user data to the terminal device 200 using the beam associated with the ID1 (S261).

Next, the operation before the expiration date of the timer elapses will be described. The base station 100 (notification unit 155) notifies the terminal device 200 of the information on the beam reporting configuration. At this time, the base station 100 does not notify the terminal device 200 of the information on the back up beam reporting configuration (S263). Then, the base station 100 (communication control unit 151) performs the beam sweeping (S265).

The terminal device 200 (communication control unit 241) receives a beam transmitted by the base station 100 in each of a plurality of directions in a time-division manner based on the information notified from the base station 100. The terminal device 200 (selection unit 245) measures the qualities (for example, RSRP) of each beam, and selects the main beam according to the measurement result. At this time, the terminal device 200 does not select the back up beam based on the information notified from the base station 100. The terminal device 200 (notification unit 247) associates the information (for example, RSRP measurement result) corresponding to the measurement result of the quality of the beam with an ID of the selected main beam and the back up beam, and then notifies the base station 100 of the ID (S267).

Subsequently, as shown by reference numeral S269, it is assumed that the expiration date of the timer has elapsed. In this case, the base station 100 (notification unit 155) notifies the terminal device 200 of the information on the beam reporting configuration and the information on the back up beam reporting configuration, respectively (S271). Then, the base station 100 (communication control unit 151) performs the beam sweeping (S273) .

The terminal device 200 (communication control unit 241) receives a beam transmitted by the base station 100 in each of a plurality of directions in a time-division manner based on the information notified from the base station 100. The terminal device 200 (selection unit 245) measures qualities (for example, RSRP) of each beam, and selects the main beam and the back up beam according to the measurement result. The terminal device 200 associates the information (for example, RSRP measurement result) corresponding to the measurement result of the quality of the beam with the IDs of each of the selected main beam and the back up beam, and then notifies the base station 100 of the IDs (S275).

With the above-described control, when the base station 100 registers the back up beam based on the report from the terminal device 200, the base station 100 determines that the back up beam is valid for a certain period by the timer control. Then, when the expiration date of the timer elapses, the base station 100 reports the back up beam to the terminal device 200 again, and then newly registers the back up beam. That is, the base station 100 controls the terminal device 200 so as not to request the report on the back up beam during the period when the back up beam is valid. With such control, a frequency at which the report on the back up beam is made is suppressed, and it is possible to reduce a UL overhead due to the report compared to the case where the report on the back up beam is performed every time the beam sweeping is performed.

Hereinabove, the communication system according to Modification 1 has been described with reference to FIG. 13.

### (Modification 2)

Next, another modification of the communication system according to the embodiment of the present disclosure will be described. Hereinafter, the present modification is also referred to as "Modification 2".

As described above, in the communication system according to the present embodiment, when the terminal device 200 performs the beam reporting to the base station 100, the terminal device 200 also reports the back up beam. In the present modification, the terminal device 200 sets a beam group (hereinafter, also referred to as a "back up beam group") including one or more back up beams, and reports the beam group to the base station 100.

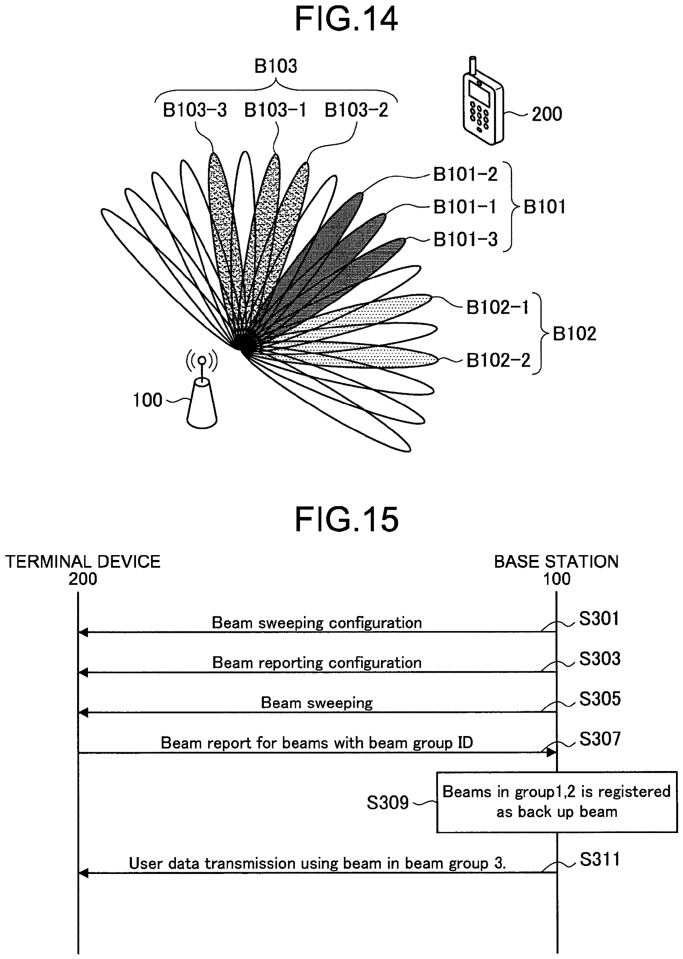

For example, FIG. 14 is an explanatory diagram for describing an overview of a communication system according to Modification 2. In the example illustrated in FIG. 14, back up beam groups B101 to B103 are set. Specifically, the back up beam group B101 is set to include back up beams B101-1 to B101-3. In addition, the back up beam group B102 is set to include back up beams B102-1 to B102-2. In addition, the back up beam group B103 is set to include back up beams B103-1 to B103-3.

Note that it is preferable that each back up beam group have a low correlation with each other and are set so that beams included in the other group can be used as backup of beams included in one group. Further, the plurality of beams included in the same group may be beams having the same characteristics as each other. In addition, the base station can recognize that beams belonging to different back up groups have a relationship that can be used as backup for each other. Therefore, it may not be clearly indicated that each of the beams belonging to different back up groups is the backup. Of course, it may be clearly indicated that each of the beams belonging to different back up groups is the backup.

As a method of classifying each beam into a back up group, for example, there is a method of classifying each of the plurality of beams into a group according to an arrival direction of each beam when viewed from the terminal device 200. In this case, the terminal device 200 may classify each beam according to the direction (that is, the arrival direction of the beam) in which each of the beams reaches the terminal device 200 based on the reception result of each beam, and group each beam according to the classification result.

Further, as another example, there is a method of classifying each of a plurality of beams into groups according to the direction (radiation direction) in which the base station 100 transmits each beam. In this case, the terminal device 200 may acquire in advance, from the base station 100, information on the direction in which each beam was transmitted (for example, information and the like indicating how different the directions in which each beam is transmitted are) or information on a correlation value and the like between the respective beams transmitted from the base station 100. By doing so, the terminal device 200 can determine the back up beams for each of the received beams according to the direction in which the base station 100 transmits the beam when viewed from the base station 100. That is, for each of the determined back up beams, the terminal device 200 can also report a measurement result (for example, RSRP) of the quality of the beam to the base station 100. Further, the terminal device 200 may classify each beam according to the direction in which the base station 100 transmits the beam, and may group each beam according to the classification result.

Here, an example of the flow of a series of processing of the communication system according to Modification 2, in particular, an example of the flow of processing related to the beam reporting from the terminal device 200 to the base station 100, will be described with reference to FIG. 15. FIG. 15 is a sequence diagram illustrating an example of the flow of a series of processing of the communication system according to Modification 2.

As illustrated in FIG. 15, the base station 100 (notification unit 155) notifies the terminal device 200 located within its own communication range (within a cell) of information on the beam sweeping configuration (S301). Further, the base station 100 (notification unit 155) notifies the terminal device 200 of the information on the beam reporting configuration (S303). Then, the base station 100 (communication control unit 151) performs the beam sweeping (S305). Specifically, the base station 100 radiates a beam in a time division manner in each of a plurality of directions.

The terminal device 200 (communication control unit 241) receives a beam transmitted by the base station 100 in each of a plurality of directions in a time-division manner based on the information notified from the base station 100. The terminal device 200 (selection unit 245) selects beams to be used as the main beam or the back up beam based on the reception result of each beam, and assigns each of the selected beams to a beam group. Then, the terminal device 200 (notification unit 247) notifies the base station 100 of the information (for example, the ID of the beam group) on the set beam group in association with the beam report (S307). In this description, it is assumed that beam groups 1 to 3 have been set.

The base station 100 (information acquisition unit 243) acquires, from the terminal device 200, a notification (beam report) with which the information on the beam group set by the terminal device 200 is associated. For example, based on the notification from the terminal device 200, the base station 100 (communication control unit 151) selects, as the main beam, a beam belonging to one of the beam groups set by the terminal device 200, and registers beams belonging to other beam groups as the back up beams. In this description, it is assumed that a beam belonging to beam group 3 is selected as the main beam, and beams belonging to beam groups 1 and 2 have been registered as back up beams (S309). Then, the base station 100 (communication control unit 151) transmits the user data to the terminal device 200 using the beam (that is, beam selected as the main beam) belonging to the beam group 3 (S311).

When the back up beam group is set according to the direction in which the base station 100 transmits each beam, the beams belonging to the same beam group may appear as beams arriving from different directions from each other when viewed from the terminal device 200. Similarly, when the back up beam group is set according to the arrival direction of each beam to the terminal device 200, the beams belonging to the same beam group may appear as beams transmitted in different directions from each other when viewed from the base station 100.

Further, when the beam group is set, only some of one or more beams (for example, a beam having better characteristics) included in the beam group may be used for communication. In this case, for example, when switching to the backup, the beam sweeping is performed in the back up beam group to be switched, so some of the beams belonging to the back up beam group may also be selected as the back up beam. In this case, since the range in which the beam sweeping is performed is limited to the range of the back up beam group, the time required for processing can be shortened compared to the case where the beam sweeping is performed on all the back up beam groups.

Hereinabove, the communication system according to Modification 2 has been described with reference to FIGS. 14 and 15.

### (Modification 3)

Next, another modification of the communication system according to the embodiment of the present disclosure will be described. Hereinafter, the present modification is also referred to as "Modification 3". In the present modification, an example of control according to a blocking situation will be described.

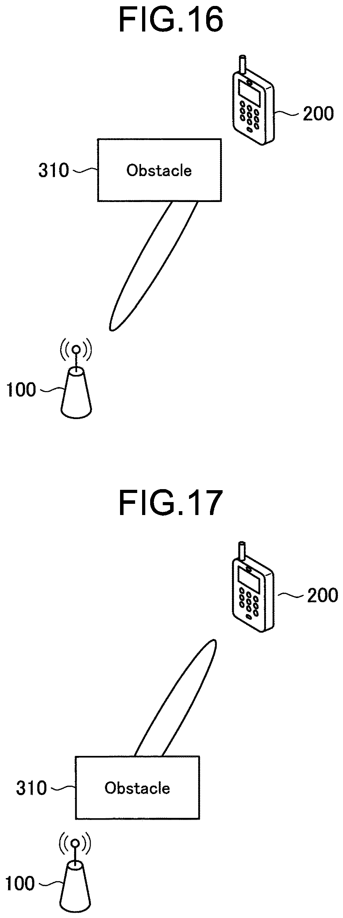

First, an example of the blocking situation will be described with reference to FIGS. 16 and 17. As described above, the blocking occurs when obstacles such as a person, a vehicle, or a building intervene between a base station 100 and a terminal device 200, and the communication (in other words, beam) between the base station 100 and the terminal device 200 is shielded due to the obstacles. On the other hand, the blocking situations differ depending on the positional relationship between the base station 100, the terminal device 200, and the obstacles.

For example, FIG. 16 is an explanatory diagram for describing an example of the blocking situation. In the example illustrated in FIG. 16, an obstacle 310 is located near the terminal device 200, and a beam from the base station 100 is shielded due to the obstacle 310. In addition, FIG. 17 is an explanatory diagram for describing another example of the blocking situation. In the example illustrated in FIG. 17, the obstacle 310 is located near the base station 100, and the beam from the base station 100 is shielded due to the obstacle 310. In each case illustrated in FIGS. 16 and 17, beams to be held as candidates of backup are different.

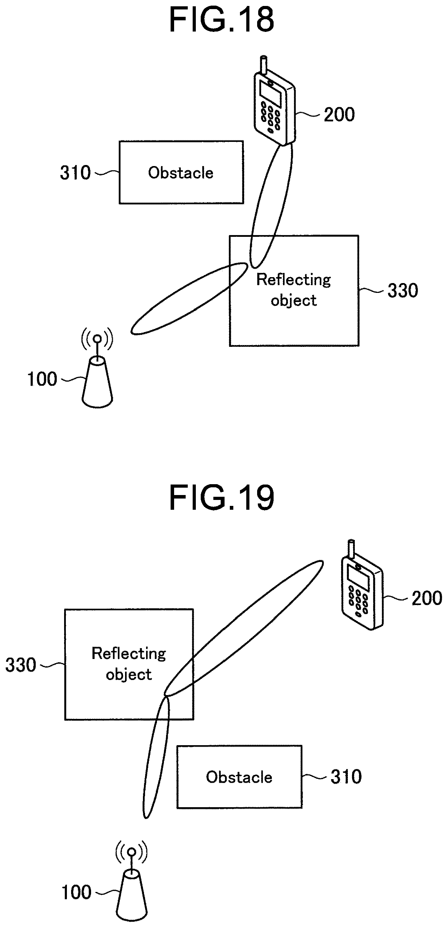

For example, as illustrated in FIG. 16, when the obstacle 310 is located near the terminal device 200, it is important to use a beam arriving from a direction different from a direction in which the obstacle 310 is located when viewed from the terminal device 200. For example, FIG. 18 is an explanatory diagram for describing an example of the beam selected according to the blocking situation, and illustrates an example of a case where the obstacle 310 is located near the terminal device 200 as illustrated in FIG. 16. Specifically, FIG. 18 illustrates an example of a beam that is reflected by a reflecting object 330 such as a building and arrives at the terminal device 200 from a direction different from the direction in which the obstacle 310 is located.

On the other hand, as illustrated in FIG. 17, when the obstacle 310 is located near the base station 100, it is important to use a beam that is transmitted in the direction different from the direction in which the obstacle 310 is located when viewed from the base station 100 and arrives at the terminal device 200. For example, FIG. 19 is an explanatory diagram for describing an example of the beam selected according to the blocking situation, and illustrates an example of a case where the obstacle 310 is located near the base station 100 as illustrated in FIG. 17. Specifically, FIG. 19 illustrates an example of a beam that is transmitted from the base station 100 to the base station 100 in a direction different from the direction in which the obstacle 310 is located and is reflected by the reflecting object 330 such as a building to arrive at the terminal device 200.

Considering the above situation, for example, when the beam is blocked near the terminal device 200, it is preferred to select the candidates of the beam arriving from the different direction from the beam previously used as a back up beam when viewed from the terminal device 200. It is assumed that the beam selected at this time has a possibility that the direction transmitted from the base station 100 is significantly different from the beam previously used, and a possibility that the direction transmitted from the base station 100 is not significantly different from the beam previously used. This is based only on the terminal device 200 perspective.

In such a case, for example, first, based on reception beamforming on the terminal device 200, reception beamforming on the terminal device 200 for receiving a better beam is specified. Then, when the back up beam is determined, in the case of using the reception beamforming on the terminal device 200 in the direction different from the reception beamforming of the specified terminal device 200, it is necessary to specify the beam from the base station 100 which can receive with larger received power. In this case, the terminal device 200 may report the specified beam to the base station 100 as the back up beams from the terminal device 200 (UE) perspective. Note that the report on the back up beams from the terminal device 200 perspective corresponds to an example of "first information".

In addition, when the beam is blocked near the base station 100, candidates for the beam transmitted in the direction different from the previously used beam when viewed from the base station 100 is preferably selected as the back up beam. It is assumed that the beam selected at this time has a possibility that the direction arriving at the terminal device 200 is significantly different from the beam previously used, and a possibility that the direction arriving at the terminal device 200 is not be significantly different from the beam previously used. This is based only on the base station 100 perspective.

In such a case, for example, first, the terminal device 200 specifies a better beam from the beams transmitted by the beam sweeping by the base station 100. Then, when the back up beam is determined, a beam that can be received with larger received power may be specified from among the specified beam and a beam having a lower correlation from the base station 100 perspective. In this case, in the terminal device 200, a mechanism for determining whether the correlation (that is, the correlation between the beams from the base station 100 perspective) between the beams transmitted from the base station 100 is low is required. Therefore, for example, before the beam sweeping starts, the base station 100 may notify the terminal device 200 of information such as a direction of each beam transmitted from the base station 100, the antenna weight used for the beam, the correlation value between the transmitted beams, and the like (base station beam information). By doing so, the terminal device 200 can select candidates of a beam to be transmitted in a direction different from the previously used beam, when viewed from the base station 100. In this case, the terminal device 200 may report the specified beam to the base station 100 as a back up beam from the base station 100. In this case, the terminal device 200 may report the specified beam to the base station 100 as the back up beams from the base station 100 perspective. Note that the report on the back up beams from the base station 100 perspective corresponds to an example of "second information".

As the report of the back up beam, for example, the back up beam (back up beam from base station perspective) when the blocking occurs near the base station 100 and the back up beam (back up beams from UE perspective) when the blocking occurs near the terminal device 200 may be notified to the base station 100.

Further, when the blocking occurs, the terminal device 200 may perform a beam recovery request to the base station 100 (blocking notification). At this time, a case may be assumed where it is difficult for the base station 100 to determine whether the blocking has occurred near the base station 100 or the terminal device 200. Therefore, for example, the base station 100 may transmit the back up beams from the base station 100 and the terminal device 200 perspectives, respectively, which are registered as the backup to the terminal device 200, and acquire the report according to the evaluation result of the beam from the terminal device 200. In this case, for example, the base station 100 may use a beam having a better evaluation result from the terminal device 200 to recover communication with the terminal device 200. Of course, the above is only an example, and does not necessarily limit the beam recovery operation. As a specific example, when the base station 100 can recognize the positional relationship between the base station 100, the terminal device 200, and the obstacles, the back up beam according to at least one of the base station 100 and the terminal device 200 perspectives may be used for the communication recovery according to the recognition result.

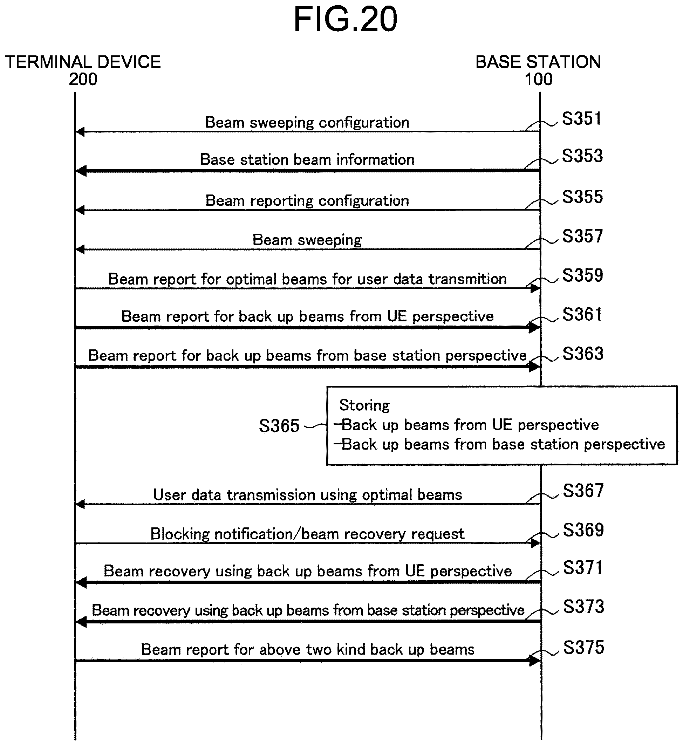

Here, an example of the flow of a series of processing of the communication system according to Modification 3, in particular, the flow of processing related to the beam reporting from the terminal device 200 to the base station 100 will be described with reference to FIG. 20. FIG. 20 is a sequence diagram illustrating an example of the flow of a series of processing of the communication system according to Modification 3.

As illustrated in FIG. 20, the base station 100 (notification unit 155) notifies the terminal device 200 located within its own communication range (within a cell) of information on the beam sweeping configuration (S351). Further, the base station 100 (notification unit 155) notifies the terminal device 200 of information (base station beam information) on each beam transmitted from the base station 100 (S353). Further, the base station 100 (notification unit 155) notifies the terminal device 200 of the information on the beam reporting configuration (S355). Then, the base station 100 (communication control unit 151) performs the beam sweeping (S357). Specifically, the base station 100 radiates a beam in a time division manner in each of a plurality of directions.

The terminal device 200 (communication control unit 241) receives a beam transmitted by the base station 100 in each of a plurality of directions in a time-division manner based on the information notified from the base station 100. The terminal device 200 (selection unit 245) selects a beam to be preferentially used for transmitting user data (that is, main beam) based on the reception result of each beam, and notifies the base station 100 of information on the selected beam in association with the beam report (S359). Further, the terminal device 200 specifies back up beams from the terminal device (UE) 200 perspective, and notifies the base station 100 of the information on the beam in association with the beam report (S361). Further, the terminal device 200 specifies back up beams from the base station 100 perspective, and notifies the base station 100 of the information on the beam in association with the beam report (S363).

The base station 100 (information acquisition unit 243) registers the back up beams from the terminal device 200 (UE) perspective and the back up beams from the base station 100 perspective (S365), based on the information (beam report) notified from the terminal device 200. Further, the base station 100 (communication control unit 151) transmits the user data to the terminal device 200, for example, using the beam selected as the main beam based on the information notified from the terminal device 200 (S367).

Subsequently, it is assumed that the blocking occurs and the terminal device 200 (notification unit 247) performs a beam recovery request (blocking notification/beam recovery request) to the base station 100 (S369).

The base station 100 (communication control unit 151) transmits back up beams from the terminal device (UE) 200 perspective and back up beams from the base station 100 perspective, respectively, to the terminal device 200 which are registered as backup (S371 and S373). The terminal device 200 (communication control unit 241) receives the back up beams transmitted from the base station 100 from the terminal device 200 and the base station 100 perspectives. Then, the terminal device 200 (notification unit 247) reports both the back up beams from the terminal device 200 and the base station 100 perspectives, respectively (S375). Thereby, the base station 100 can recover the communication with the terminal device 200 using a better beam among the back up beams from the terminal device 200 and the base station 100 perspectives, respectively.

Since it takes time to process the normal beam sweeping, it is preferable to search for a beam (for example, beam having good quality) that can be used for recovery from registered back up beams as much as possible. However, when the suitable beam does not exist among the registered back up beams, the base station 100 may search for the beam that can be used for recovery by the normal beam sweeping. This operation is not limited to the present modification, but is also the same, for example, for the above-described embodiment and examples according to other modifications.

Hereinabove, the communication system according to Modification 3 has been described with reference to FIGS. 16 to 20.

### (Modification 4)

Next, another modification of the communication system according to the embodiment of the present disclosure will be described. Hereinafter, the present modification is also referred to as "Modification 4". In the present modification, an example of control that assumes use of a partial frequency band will be described. In the following description, a "frequency band" is also simply referred to as a "band".

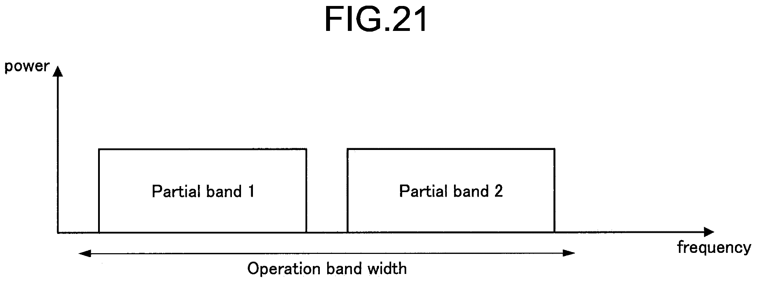

First, an overview of a "partial band" will be described with reference to FIG. 21. FIG. 21 is an explanatory diagram for describing an overview of a partial band in 5G. As illustrated in FIG. 21, in 5G, a plurality of partial bands (partial band and band width part) are prepared in one component carrier. These partial bands can be used for various applications, such as being used for high-speed downloads or for transmitting low-latency traffic. In addition, separate partial bands each having a different subcarrier spacing may be used. As a specific example, bands having a different subcarrier spacing for each feature may be used. Examples of subcarrier intervals include, for example, 15 kHz, 30 kHz, 60 kHz, and the like. In addition, a different numerology may be applied to each partial band.

When the partial bands are used, basically, beam sweeping is performed for each band. For example, in the example illustrated in FIG. 21, partial band 1 and partial band 2 are set as the partial bands. In this case, normal beam sweeping is performed for both partial band 1 and partial band 2. In addition, a back up beam may be set for each of the partial band 1 and the partial band 2, and in this case, a terminal device 200 notifies a base station 100 of information (report) on back up beams for both the partial band 1 and the partial band 2. On the base station 100, the back up beams for each of the partial band 1 and the partial band 2 are registered in response to the notification from the terminal device 200.

In addition, when a beam recovery request is made from the terminal device 200 to the base station 100, the base station 100 may perform time division multiplexing or frequency multiplexing on the back up beams corresponding to each of the partial band 1 and the partial band 2 and transmit the multiplexed back up beams to the terminal device 200. At this time, the base station 100 may transmit the multiplexed back up beams corresponding to each of the partial band 1 and partial band 2 as one configuration. As a result, the terminal device 200 can, for example, simultaneously evaluate the back up beams corresponding to each of the partial band 1 and the partial band 2 and shorten the beam recovery time.

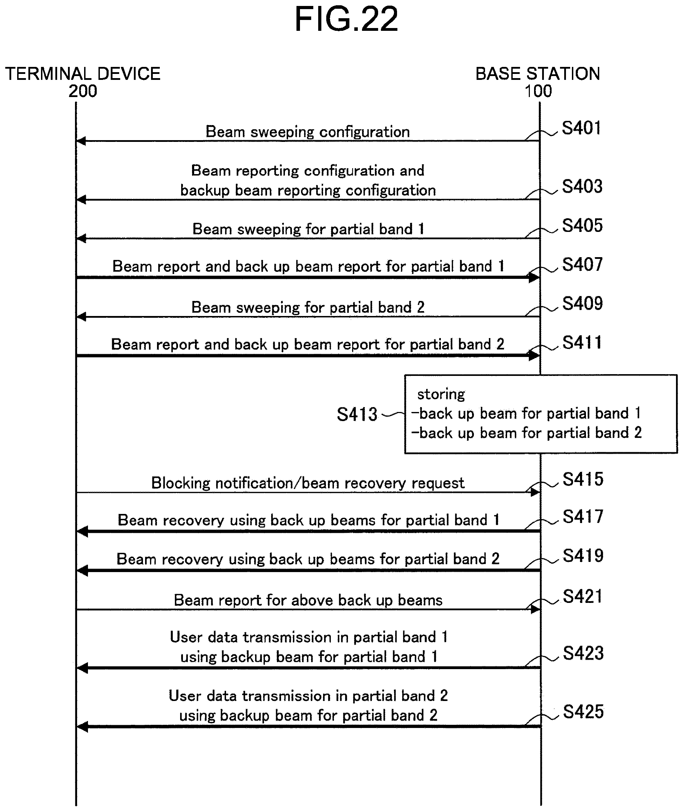

Here, an example of a flow of a series of processing of the communication system according to Modification 4, in particular, a flow of processing related to beam reporting from the terminal device 200 to the base station 100 will be described with reference to FIG. 22. FIG. 22 is a sequence diagram illustrating an example of the flow of a series of processing of the communication system according to Modification 4. In the example illustrated in FIG. 22, it is assumed that partial band 1 and partial band 2 are set as the partial bands as illustrated in FIG. 21.

As illustrated in FIG. 22, the base station 100 (notification unit 155) notifies the terminal device 200 located within its own communication range (within a cell) of information on the beam sweeping configuration (S401). In addition, the base station 100 (notification unit 155) notifies the terminal device 200 of the information on a beam reporting configuration and information on a back up beam reporting configuration (S403).

Subsequently, the base station 100 (communication control unit 151) performs the beam sweeping. At this time, the base station 100 individually performs the beam sweeping for each of the partial band 1 and the partial band 2.

Specifically, first, the base station 100 (communication control unit 151) performs the beam sweeping for the partial band 1 (S405). The terminal device 200 (communication control unit 241) receives a beam that the base station 100 transmits in a time-division manner in each of a plurality of directions using partial band 1 based on the information notified from the base station 100. The terminal device 200 (selection unit 245) performs, based on the reception result of each beam, notification of information (beam report) on a main beam and notification of information (back up beam report) on the back up beam for partial band 1 (S407).

Next, the base station 100 (communication control unit 151) performs the beam sweeping for the partial band 2 (S409). The terminal device 200 (communication control unit 241) receives a beam that the base station 100 transmits in a time division manner in each of the plurality of directions using partial band 2 based on the information notified from the base station 100. The terminal device 200 (selection unit 245) performs, based on the reception result of each beam, the notification of the information (beam report) on the main beam and the notification of the information (back up beam report) on the back up beam for partial band 2 (S411).

The base station 100 (information acquisition unit 243) registers the back up beams for each of the partial band 1 and the partial band 2 based on the information notified for each of the partial band 1 and the partial band 2 from the terminal device 200 (S413).

Subsequently, it is assumed that the blocking occurs and the terminal device 200 (notification unit 247) performs a beam recovery request (blocking notification/beam recovery request) to the base station 100 (S415).

The base station 100 (communication control unit 151) transmits, to the terminal device 200, the back up beam corresponding to the partial band 1 and the back up beam corresponding to the partial band 2, respectively, which are registered as the backup (S417 and S419). At this time, as described above, the base station 100 may perform the time division multiplexing or the frequency division multiplexing on the back up beams corresponding to each of the partial band 1 and partial band 2 and transmit the multiplexed back up beams as one configuration. The terminal device 200 (communication control unit 241) receives the back up beams corresponding to each of the partial band 1 and the partial band 2 which are transmitted from the base station 100. Then, the terminal device 200 (notification unit 247) reports both the back up beams corresponding to each of the partial band 1 and the partial band 2 (S421). Thereby, the base station 100 can recover the communication with the terminal device 200 using a better beam for each of the partial band 1 and the partial band 2.

Then, for partial band 1, the base station 100 transmits user data to the terminal device 200 using the back up beam corresponding to the partial band 1 (S423). Similarly, for partial band 2, the base station 100 transmits the user data to the terminal device 200 using the back up beam corresponding to the partial band 2 (S425).

Note that in the example illustrated in FIG. 22, the case where there is a need to recover both the partial band 1 and the partial band 2 has been described. On the other hand, the situation where only one of the partial band 1 and the partial band 2 is recovered may be assumed. For example, when only the partial band 1 is recovered, the terminal device 200 may notify the base station 100 of a request to recover only the partial band 1 by the beam recovery request. In addition, in this case, the base station 100 may execute the beam recovery processing only for the partial band 1 in response to a request from the terminal device 200.

In addition, in the above description, the processing has been described focusing on the processing for each partial band, but it is also possible to replace the partial band with a component carrier and execute the processing. That is, the back up beams are registered for each component carrier, and the communication between the base station 100 and the terminal device 200 can be recovered for each component carrier using the registered back up beams.

Hereinabove, the communication system according to Modification 4 has been described with reference to FIGS. 21 and 22.

### (Modification 5)

Next, another modification of the communication system according to the embodiment of the present disclosure will be described. Hereinafter, the present modification is also referred to as "Modification 5".

In the modifications described above, an example of the case (that is, the beam recovery is performed) where the back up beam for each partial band are registered, and then the communication between the base station 100 and the terminal device 200 is recovered using the corresponding back up beams for each partial band has been described. In the present modification, an example of a technology that can shorten a beam recovery time for a band in which higher priority communication is performed by setting priority between partial bands (or between back up beams for each partial band) and performing a beam depending on the priority will be described.

Specifically, in the communication system according to the present modification, when a beam recovery message includes information on a plurality of partial bands (for example, partial bands), it is determined in advance which band the back up beams are preferentially used. The priority may be notified from the base station 100 to the terminal device 200, for example. In addition, as another example, the priority may be defined in advance by a standard or the like. In addition, as another example, the terminal device 200 may notify the base station 100 of information on the desired priority. Further, the priority may be set between bands or between back up beams registered for each band.

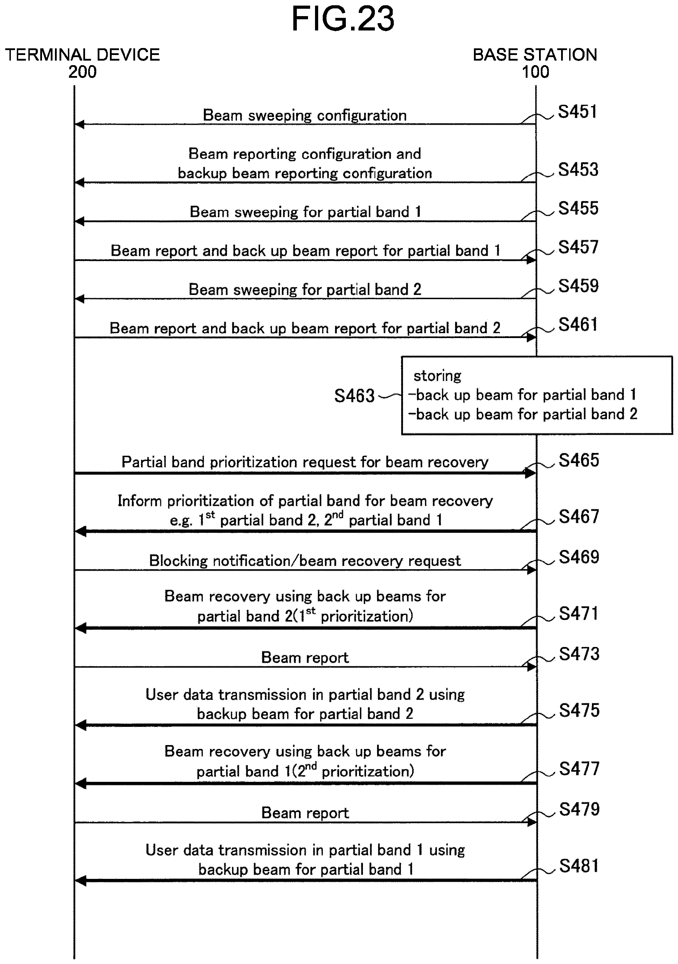

Here, an example of a flow of a series of processing of the communication system according to Modification 5, in particular, a flow of processing related to beam reporting from the terminal device 200 to the base station 100 will be described with reference to FIG. 23. FIG. 23 is a sequence diagram illustrating an example of the flow of a series of processing of the communication system according to Modification 5. In the example illustrated in FIG. 23, it is assumed that partial band 1 and partial band 2 are set as the partial bands as illustrated in FIG. 21.

First, the base station 100 and the terminal device 200 execute a procedure of registering a back up beam, as indicated by reference numerals S451 to S463. Processing denoted by reference numerals S451 to S463 is substantially the same as the processing denoted by reference numerals S401 to S413 in the example illustrated in FIG. 22.

In addition, the terminal device 200 (notification unit 247) notifies the base station 100 of a request for setting priority between partial bands for beam recovery (S465). The base station 100 (notification unit 155) notifies information on the priority set between the partial bands in response to the request from the terminal device 200 (S467). In the example illustrated in FIG. 23, it is assumed that higher priority is set for partial band 2 than for the partial band 1. Specifically, the highest priority (1st prioritization) may be set for the partial band 2, and the next highest priority (2nd prioritization) may be set for the partial band 1.

Subsequently, it is assumed that the blocking occurs and the terminal device 200 (notification unit 247) performs a beam recovery request (blocking notification/beam recovery request) to the base station 100 (S469).

The base station 100 first recovers the beam for the partial band 2 in which the highest priority (1st prioritization) is set. Specifically, the base station 100 (communication control unit 151) transmits the back up beam corresponding to the partial band 2 to the terminal device 200 (S471). The terminal device 200 (communication control unit 241) receives the back up beam corresponding to the partial band 2 which is transmitted from the base station 100. In addition, the terminal device 200 (notification unit 247) reports on the back up beam corresponding to the partial band 2 (S473). Thereby, the base station 100 can recover the communication with the terminal device 200 using a better beam for the partial band 2. Then, for partial band 2, the base station 100 transmits user data to the terminal device 200 using the back up beam corresponding to the partial band 2 (S475).

Next, the base station 100 performs the beam recovery on the partial band 1 in which the second highest priority (2nd prioritization) of the partial band 2 is set. Specifically, the base station 100 (communication control unit 151) transmits the back up beam corresponding to the partial band 1 to the terminal device 200 (S477). The terminal device 200 (communication control unit 241) receives the back up beam corresponding to the partial band 1 which is transmitted from the base station 100. In addition, the terminal device 200 (notification unit 247) reports on the back up beam corresponding to the partial band 1 (S479). Thereby, the base station 100 can recover the communication with the terminal device 200 using a better beam for the partial band 1. Then, for partial band 1, the base station 100 transmits user data to the terminal device 200 using the back up beam corresponding to the partial band 1 (S481).

As described above, when the beam recovery request is notified from the terminal device 200, the base station 100 recovers a beam preferentially using a band having higher priority. As a result, it is possible to further shorten the recovery time of communication for which higher priority is set.

Note that, among a plurality of partial bands in which the back up beam is registered, the beam recovery may be performed only for some two or more bands. In this case, for example, among two or more bands in which the beam recovery has been requested, the band having higher priority may be controlled to be a beam to be recovered more preferentially.

Hereinabove, the communication system according to Modification 5 has been described with reference to FIG. 23.

### (Modification 6)

Next, another modification of the communication system according to the embodiment of the present disclosure will be described. Hereinafter, the present modification is also referred to as "Modification 6".

In the above-described Modifications 5 and 6, an example in which a back up beam is registered for each partial band has been described. On the other hand, in the present modification, an example of a technology of reducing signaling at the time of registering the back up beam or recovering the beam, and furthermore, improving in throughput by registering the back up beam in common between a plurality of partial bands is proposed.

More specifically, it is more preferable that CSI acquisition is executed separately for each partial band. This is due to the fact that channel characteristics may be different for each partial band. On the other hand, regarding a procedure for searching for a better beam in a beam management procedure, the beam used in each partial band does not often differ greatly. This is because beamforming used in 5G forms a beam by concentrating energy in a specific direction, and therefore a slight difference in frequency does not cause a large change in the direction in which the beam is directed. From such characteristics, for example, even if a better beam is selected for each partial band in normal times, it is assumed that a common beam may be registered for the beam for beam recovery in emergency.

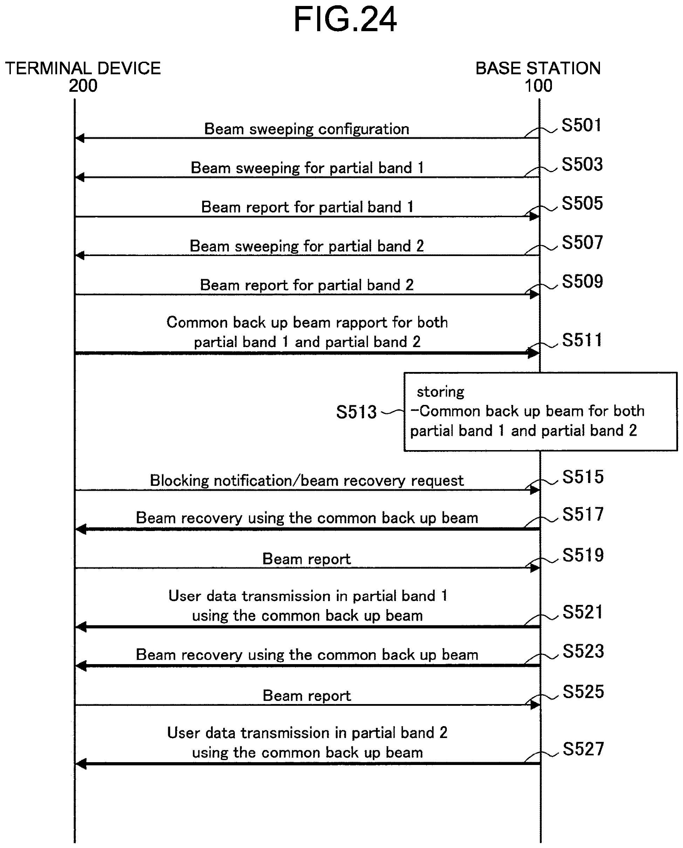

Here, an example of a flow of a series of processing of the communication system according to Modification 6, in particular, a flow of processing related to beam reporting from the terminal device 200 to the base station 100 will be described with reference to FIG. 24. FIG. 24 is a sequence diagram illustrating an example of the flow of a series of processing of the communication system according to Modification 6. In the example illustrated in FIG. 24, it is assumed that partial band 1 and partial band 2 are set as the partial bands as illustrated in FIG. 21.

As illustrated in FIG. 24, the base station 100 (notification unit 155) notifies the terminal device 200 located within its own communication range (within a cell) of information on the beam sweeping configuration (S501). Subsequently, the base station 100 (communication control unit 151) performs the beam sweeping. At this time, the base station 100 individually performs the beam sweeping for each of the partial band 1 and the partial band 2.

Specifically, first, the base station 100 (communication control unit 151) performs the beam sweeping for the partial band 1 (S503). The terminal device 200 (communication control unit 241) receives a beam that the base station 100 transmits in a time-division manner in each of a plurality of directions using partial band 1 based on the information notified from the base station 100. The terminal device 200 (selection unit 245) notifies information (beam report) on the main beam for partial band 1 based on the reception result of each beam (S505).

Next, the base station 100 (communication control unit 151) performs the beam sweeping for the partial band 2 (S507). The terminal device 200 (communication control unit 241) receives a beam that the base station 100 transmits in a time division manner in each of the plurality of directions using partial band 2 based on the information notified from the base station 100. The terminal device 200 (selection unit 245) notifies information (beam report) on the main beam for partial band 2 based on the reception result of each beam (S509).

In addition, the terminal device 200 (selection unit 245) performs the notification of the information (back up beam report) on the back up beam common to the partial band 1 and the partial band 2 based on the reception result of each beam transmitted for each of the partial band 1 and the partial band 2 (S511).

The base station 100 (information acquisition unit 243) registers the back up beam common to the partial band 1 and the partial band 2 based on the information notified in common to the partial band 1 and the partial band 2 from the terminal device 200 (S513).

Subsequently, it is assumed that the blocking occurs and the terminal device 200 (notification unit 247) performs the beam recovery request (blocking notification/beam recovery request) to the base station 100 (S515).

First, the recovery of the beam of the partial band 1 will be described. The base station 100 (communication control unit 151) transmits the back up beam common to the partial band 1 and the partial band 2 to the terminal device 200 (S517). The terminal device 200 (communication control unit 241) receives the back up beam common to the partial band 1 and the partial band 2 which are transmitted from the base station 100. In addition, the terminal device 200 (notification unit 247) reports the received back up beam (S473). Thereby, the base station 100 can recover the communication with the terminal device 200 using a better beam for the partial band 1. Then, for the partial band 1, the base station 100 transmits the user data to the terminal device 200 using the back up beam common to the partial band 1 and the partial band 2 (S521).

Subsequently, the recovery of the beam of the partial band 2 will be described. The base station 100 (communication control unit 151) transmits the back up beam common to the partial band 1 and the partial band 2 to the terminal device 200 (S523). The terminal device 200 (communication control unit 241) receives the back up beam common to the partial band 1 and the partial band 2 which are transmitted from the base station 100. In addition, the terminal device 200 (notification unit 247) reports the received back up beam (S525). Thereby, the base station 100 can recover the communication with the terminal device 200 using a better beam for the partial band 2. Then, for the partial band 2, the base station 100 transmits the user data to the terminal device 200 using the back up beam common to the partial band 1 and the partial band 2 (S527).

As described above, by registering the common beam between the plurality of partial bands as the back up beam, it is possible to reduce the signaling at the time of registering the back up beam and at the time of recovering the beam as compared to the case of individually registering the back up beams for each band. Therefore, according to the communication system according to the present modification, it is possible to further improve the throughput of the entire system as compared to the case of individually registering the back up beams for each partial band.

Hereinabove, the communication system according to Modification 6 has been described with reference to FIG. 24.

### <<4. Application Example>>

A technology according to the present disclosure can be applied to various products. For example, the base station 100 may be realized as any type of evolved NodeB (eNB) such as a macro eNB or a small eNB. The small eNB may be an eNB that covers a cell smaller than a macro cell, such as a pico eNB, a micro eNB, or a home (femto) eNB. Instead, the base station 100 may be realized as other types of base stations such as NodeB or a base transceiver station (BTS). The base station 100 may include a main unit (also referred to as a base station device) that controls wireless communication, and one or more remote radio heads (RRH) that are arranged at different locations from the main unit. In addition, various types of terminals described later may operate as the base station 100 by temporarily or semi-permanently executing the base station function. Furthermore, at least some components of the base station 100 may be realized in a base station device or a module for the base station device.

In addition, for example, the terminal device 200 may be realized as a mobile terminal such as a smartphone, a tablet personal computer (PC), a notebook PC, a portable game terminal, a portable/dongle type mobile router, or a digital camera, or an in-vehicle terminal such as a car navigation device. Further, the terminal device 200 may be realized as a terminal (referred to as a machine type communication (MTC) terminal) that performs machine to machine (M2M) communication. In addition, the terminal device 200 may be realized as a so-called low-cost UE such as an MTC terminal, an eMTC terminal, and an NB-IoT terminal. Further, at least some components of the terminal device 200 may be realized in a module (for example, integrated circuit module constituted by one die) mounted on the terminal.

### <4.1. Application example for base station>

### (First Application Example)

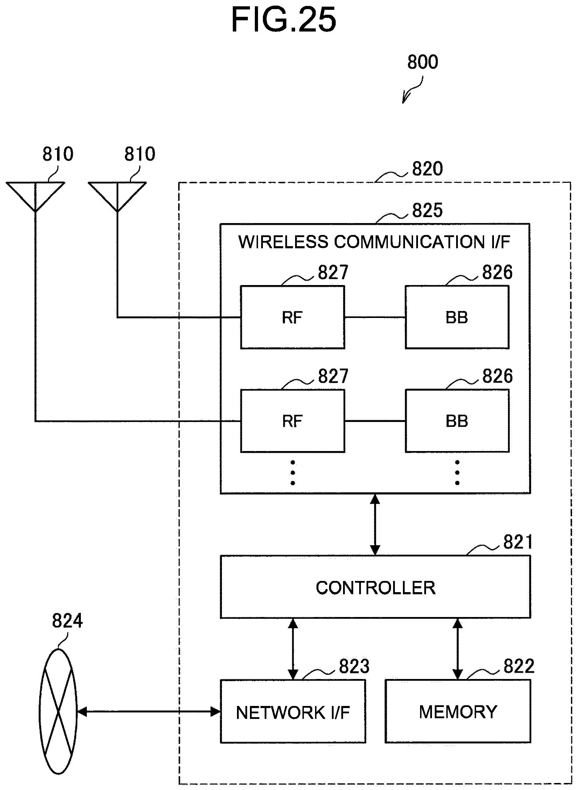

FIG. 25 is a block diagram illustrating a first example of a schematic configuration of an eNB to which the technology according to the present disclosure can be applied. An eNB 800 has one or more antennas 810 and a base station device 820. Each antenna 810 and the base station device 820 can be connected to each other via an RF cable.

Each antenna 810 has a single or a plurality of antenna elements (for example, a plurality of antenna elements forming a MIMO antenna), and is used by the base station device 820 to transmit and receive a wireless signal. As illustrated in FIG. 25, the eNB 800 has the plurality of antennas 810, and the plurality of antennas 810 may correspond to each of the plurality of frequency bands used by the eNB 800, for example. Although FIG. 25 illustrates an example in which the eNB 800 has the plurality of antennas 810, the eNB 800 may have the single antenna 810.

The base station device 820 includes a controller 821, a memory 822, a network interface 823, and a wireless communication interface 825.

The controller 821 may be, for example, a CPU or a DSP, and operates various functions of an upper layer of the base station device 820. For example, the controller 821 generates a data packet from data in a signal processed by a wireless communication interface 825, and transfers the generated packet via the network interface 823. The controller 821 may generate a bundled packet by bundling data from a plurality of baseband processors, and transmit the generated bundled packet. Further, the controller 821 may have logical functions that execute control such as radio resource control, radio bearer control, mobility management, admission control, or scheduling. Further, the control may be executed in cooperation with neighboring eNBs or a core network node. The memory 822 includes a RAM and a ROM, and stores a program executed by the controller 821 and various control data (for example, terminal list, transmission power data, scheduling data, and the like).

The network interface 823 is a communication interface for connecting the base station device 820 to the core network 824. The controller 821 may communicate with a core network node or other eNBs via the network interface 823. In that case, the eNB 800 and the core network node or another eNB may be connected to each other by a logical interface (for example, an S1 interface or an X2 interface). The network interface 823 may be a wired communication interface or a wireless communication interface for wireless backhaul. When the network interface 823 is a wireless communication interface, the network interface 823 may use a higher frequency band for wireless communication than a frequency band used by the wireless communication interface 825.

The wireless communication interface 825 supports one of cellular communication systems such as long term evolution (LTE) or LTE-Advanced, and provides a wireless connection to a terminal located in a cell of the eNB 800 via the antenna 810. The wireless communication interface 825 may typically include a baseband (BB) processor 826, an RF circuit 827, and the like. The BB processor 826 may perform, for example, encoding/decoding, modulation/demodulation, and multiplexing/demultiplexing, and may execute various signal processing of each layer (for example, L1, medium access control (MAC), radio link control (RLC), and packet data convergence protocol (PDCP)). The BB processor 826 may have some or all of the above logical functions instead of the controller 821. The BB processor 826 may be a module that includes a memory storing a communication control program, a processor executing the program, and related circuits, and the function of the BB processor 826 may be changed by updating the program. Further, the module may be a card or a blade that is inserted into a slot of the base station device 820, or a chip that is mounted on the card or the blade. On the other hand, the RF circuit 827 may include a mixer, a filter, an amplifier, and the like, and transmits and receives a wireless signal via the antenna 810.

As illustrated in FIG. 25, the wireless communication interface 825 includes the plurality of BB processors 826, and the plurality of BB processors 826 may correspond to, for example, each of the plurality of frequency bands used by the eNB 800. Further, the wireless communication interface 825 includes a plurality of RF circuits 827 as illustrated in FIG. 25, and the plurality of RF circuits 827 may correspond to, for example, a plurality of antenna elements, respectively. Although FIG. 25 illustrates an example in which the wireless communication interface 825 includes the plurality of BB processors 826 and the plurality of RF circuits 827, the wireless communication interface 825 includes a single BB processor 826 or a single RF circuit 827.

In the eNB 800 illustrated in FIG. 25, one or more components (at least any one of the communication control unit 151, the information acquisition unit 153, and the notification unit 155) included in the processing unit 150 described with reference to FIG. 2 may be mounted in the wireless communication interface 825. Alternatively, at least some of these components may be implemented in the controller 821. As an example, the eNB 800 includes a module that includes some (for example, BB processor 826) or all of the wireless communication interfaces 825 and/or the controller 821, and the module may include the one or more components. In this case, the module may store a program (in other words, a program for allowing the processor to execute the operations of the one or more components) for allowing the processor to function as the one or more components, and execute the program. As another example, the program for allowing the processor to function as the one or more components is installed in the eNB 800, and the wireless communication interface 825 (for example, BB processor 826) and/or the controller 821 may execute the program. As described above, as a device including the one or more components, the eNB 800, the base station device 820, or the module may be provided, and the program for allowing the processor to function as the one or more components may be provided. Further, a readable recording medium on which the program is recorded may be provided.

In addition, in the eNB 800 illustrated in FIG. 25, the wireless communication unit 120 described with reference to FIG. 2 may be mounted in the wireless communication interface 825 (for example, RF circuit 827). Further, the antenna unit 110 may be mounted in the antenna 810. Further, the network communication unit 130 may be mounted in the controller 821 and/or the network interface 823. Further, the storage unit 140 may be mounted in the memory 822.

### (Second Application Example)

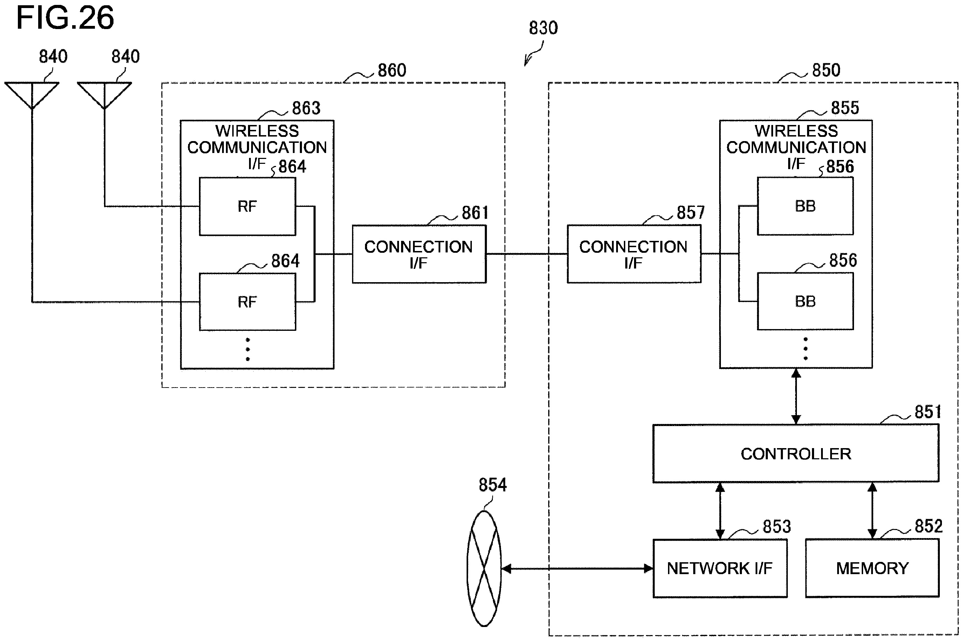

FIG. 26 is a block diagram illustrating a second example of a schematic configuration of the eNB to which the technology according to the present disclosure can be applied. An eNB 830 has one or more antennas 840, a base station device 850, and RRH 860. Each antenna 840 and the RRH 860 can be connected to each other via an RF cable. Further, the base station device 850 and the RRH 860 can be connected to each other by a high-speed line such as an optical fiber cable.

Each antenna 840 has a single or a plurality of antenna elements (for example, a plurality of antenna elements forming a MIMO antenna), and is used by the RRH 860 to transmit and receive a wireless signal. As illustrated in FIG. 26, the eNB 830 has the plurality of antennas 840, and the plurality of antennas 840 may correspond to, for example, each of the plurality of frequency bands used by the eNB 830. Although FIG. 26 illustrates an example in which the eNB 830 has the plurality of antennas 840, the eNB 830 may have the single antenna 840.

The base station device 850 includes a controller 851, a memory 852, a network interface 853, a wireless communication interface 855, and a connection interface 857. The controller 851, the memory 852, and the network interface 853 are the same as the controller 821, the memory 822, and the network interface 823 described with reference to FIG. 25.

The wireless communication interface 855 supports one of cellular communication systems such as long term evolution (LTE) or LTE-Advanced, and provides a wireless connection to a terminal located in a cell corresponding to the RRH 860 via the RRH 860 and the antenna 840. The wireless communication interface 855 may typically include a BB processor 856 and the like. The BB processor 856 is similar to the BB processor 826 described with reference to FIG. 25 except that the BB processor 856 is connected to the RF circuit 864 of the RRH 860 via the connection interface 857. As illustrated in FIG. 25, the wireless communication interface 855 includes the plurality of BB processors 856, and the plurality of BB processors 856 may correspond to each of the plurality of frequency bands used by the eNB 830, for example. Although FIG. 26 illustrates an example in which the wireless communication interface 855 includes the plurality of BB processors 856, the wireless communication interface 855 may include a single BB processor 856.

The connection interface 857 is an interface that connects the base station device 850 (wireless communication interface 855) to the RRH 860. The connection interface 857 may be a communication module for communication on the high-speed line that connects the base station device 850 (wireless communication interface 855) to the RRH 860.

In addition, the RRH 860 includes a connection interface 861 and a wireless communication interface 863.

The connection interface 861 is an interface that connects the RRH 860 (wireless communication interface 863) to the base station device 850. The connection interface 861 may be a communication module for communication on the high-speed line.

The wireless communication interface 863 transmits and receives a wireless signal via the antenna 840. The wireless communication interface 863 may typically include an RF circuit 864 and the like. The RF circuit 864 may include a mixer, a filter, an amplifier, and the like, and transmits and receives a wireless signal via the antenna 840. The wireless communication interface 863 includes a plurality of RF circuits 864 as illustrated in FIG. 26, and the plurality of RF circuits 864 may correspond to, for example, a plurality of antenna elements, respectively. Although FIG. 26 illustrates an example in which the wireless communication interface 863 includes the plurality of RF circuits 864, the wireless communication interface 863 may include a single RF circuit 864.

In the eNB 830 illustrated in FIG. 26, one or more components (at least any one of the communication control unit 151, the information acquisition unit 153, and the notification unit 155) included in the processing unit 150 described with reference to FIG. 2 may be mounted in the wireless communication interface 855 and/or the wireless communication interface 863. Alternatively, at least some of these components may be mounted in the controller 851. As an example, the eNB 830 includes a module that includes some (for example, BB processor 856) or all of the wireless communication interfaces 855 and/or the controller 851, and the module may include the one or more components. In this case, the module may store a program (in other words, a program for allowing the processor to execute the operations of the one or more components) for allowing the processor to function as the one or more components, and execute the program. As another example, the program for allowing the processor to function as the one or more components is installed in the eNB 830, and the wireless communication interface 855 (for example, BB processor 856) and/or the controller 851 may execute the program. As described above, as a device including the one or more components, the eNB 830, the base station device 850, or the module may be provided, and the program for allowing the processor to function as the one or more components may be provided. Further, a readable recording medium on which the program is recorded may be provided.

In addition, in the eNB 830 illustrated in FIG. 26, for example, the wireless communication unit 120 described with reference to FIG. 2 may be mounted in the wireless communication interface 863 (for example, RF circuit 864). Further, the antenna unit 110 may be mounted in the antenna 840. Further, the network communication unit 130 may be mounted in the controller 851 and/or the network interface 853. Further, the storage unit 140 may be mounted in the memory 852.

### <4.2. Application example for terminal device>

### (First Application Example)

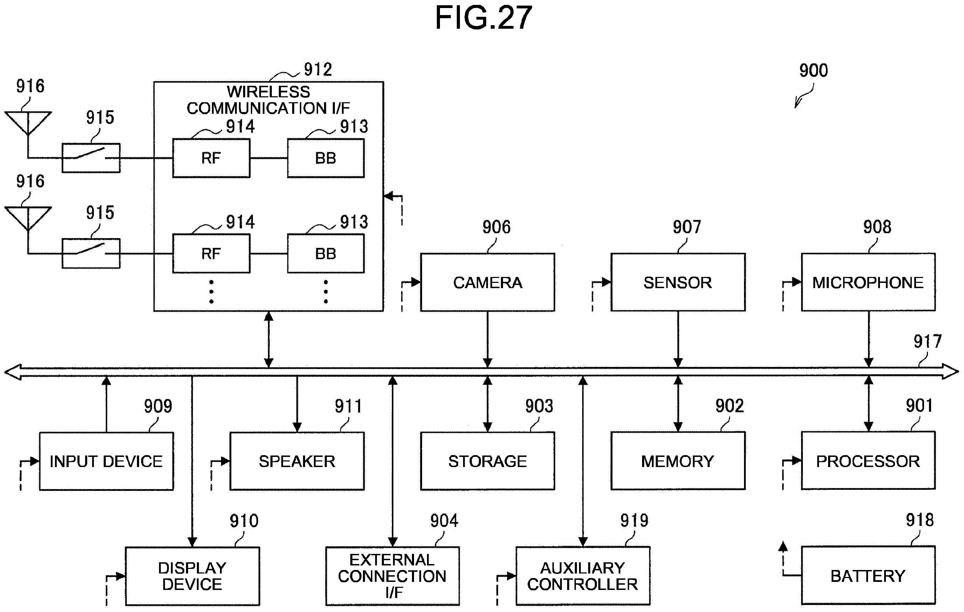

FIG. 27 is a block diagram illustrating an example of a schematic configuration of a smartphone 900 to which the technology according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, and one or more antenna switches 915, one or more antennas 916, a bus 917, a battery 918, and an auxiliary controller 919.

The processor 901 may be, for example, a CPU or a system on chip (SoC), and controls functions of an application layer and other layers of the smartphone 900. The memory 902 includes a RAM and a ROM, and stores programs and data executed by the processor 901. The storage 903 may include a storage medium such as a semiconductor memory or a hard disk. The external connection interface 904 is an interface that connects an external device such as a memory card or a universal serial bus (USB) device to the smartphone 900.

The camera 906 has an imaging element such as a charge coupled device (CCD) or a complementary metal oxide semiconductor (CMOS), and generates a captured image. The sensor 907 may include a group of sensors such as a positioning sensor, a gyro sensor, a geomagnetic sensor, and an acceleration sensor. The microphone 908 converts audio input to the smartphone 900 into an audio signal. The input device 909 includes, for example, a touch sensor that detects a touch on a screen of the display device 910, a keypad, a keyboard, a button, a switch, or the like and receives an operation or information input from a user. The display device 910 has a screen such as a liquid crystal display (LCD) or an organic light emitting diode (OLED) display, and displays an output image of the smartphone 900. The speaker 911 converts an audio signal output from the smartphone 900 into audio.

The wireless communication interface 912 supports one of cellular communication systems such as LTE and LTE-Advanced, and executes wireless communication. The wireless communication interface 912 may typically include a BB processor 913, an RF circuit 914, and the like. The BB processor 913 may perform, for example, encoding/decoding, modulation/demodulation, multiplexing/demultiplexing, and perform various signal processing for wireless communication. On the other hand, the RF circuit 914 may include a mixer, a filter, an amplifier, and the like, and transmits and receives a wireless signal via the antenna 916. The wireless communication interface 912 may be a one-chip module in which the BB processor 913 and the RF circuit 914 are integrated. The wireless communication interface 912 may include the plurality of BB processors 913 and the plurality of RF circuits 914 as illustrated in FIG. 27. Although FIG. 27 illustrates an example in which the wireless communication interface 912 includes the plurality of BB processors 913 and the plurality of RF circuits 914, the wireless communication interface 912 includes a single BB processor 913 or a single RF circuit 914.

Further, the wireless communication interface 912 may support other types of wireless communication schemes such as a short-range wireless communication scheme, a close-range wireless communication scheme, or a wireless local area network (wireless LAN) scheme, in addition to the cellular communication method, and in this case, may include the BB processor 913 and the RF circuit 914 for each wireless communication system.

Each of the antenna switches 915 switches a connection destination of the antenna 916 among a plurality of circuits (for example, circuits for different wireless communication schemes) included in the wireless communication interface 912.

Each antenna 916 has a single or a plurality of antenna elements (for example, a plurality of antenna elements forming a MIMO antenna), and is used by the wireless communication interface 912 to transmit and receive a wireless signal. The smartphone 900 may have the plurality of antennas 916 as illustrated in FIG. 27. Although FIG. 27 illustrates an example in which the smartphone 900 has the plurality of antennas 916, the smartphone 900 may have the single antenna 916.

Furthermore, the smartphone 900 may include the antenna 916 for each wireless communication scheme. In that case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to each block of the smartphone 900 illustrated in FIG. 27 via a power supply line partially indicated by a broken line in the drawing. The auxiliary controller 919 operates required minimum functions of the smartphone 900 in a sleep mode, for example.

In the smartphone 900 illustrated in FIG. 27, one or more components (at least any one of the communication control unit 241, the information acquisition unit 243, the selection unit 245, and the notification unit 247) included in the processing unit 240 described with reference to FIG. 3 may be mounted in the wireless communication interface 912. Alternatively, at least some of these components may be mounted in the processor 901 or the auxiliary controller 919. As an example, the smartphone 900 includes a module that includes some (for example, BB processor 913) or all of the wireless communication interfaces 912, a processor 901, and/or the auxiliary controller 919, and the module may include the one or more components. In this case, the module may store a program (in other words, a program for allowing the processor to execute the operations of the one or more components) for allowing the processor to function as the one or more components, and execute the program. As another example, the program for allowing the processor to function as the one or more components is installed in the smartphone 900, and the wireless communication interface 912 (for example, BB processor 913), the processor 901, and/or the auxiliary controller 919 may execute the program. As described above, as a device including the one or more components, the smartphone 900 or the module may be provided, and the program for allowing the processor to function as the one or more components may be provided. Further, a readable recording medium on which the program is recorded may be provided.

In addition, in the smartphone 900 illustrated in FIG. 27, for example, the wireless communication unit 220 described with reference to FIG. 3 may be mounted in the wireless communication interface 912 (for example, RF circuit 914). Further, the antenna unit 210 may be mounted in the antenna 916. Further, the storage unit 230 may be mounted in the memory 902.

### (Second Application Example)

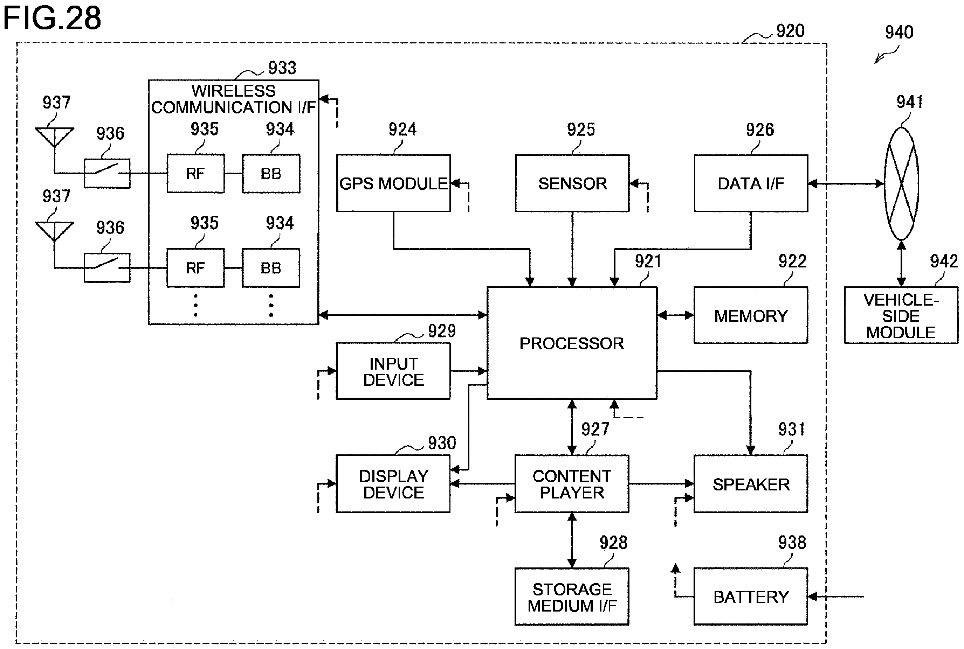

FIG. 28 is a block diagram illustrating an example of a schematic configuration of a car navigation device 920 to which the technology according to the present disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls a navigation function and other functions of the car navigation device 920. The memory 922 includes a RAM and a ROM, and stores programs and data executed by the processor 921.

The GPS module 924 measures positions (for example, latitude, longitude, and altitude) of the car navigation device 920 using a GPS signal received from a GPS satellite. The sensor 925 may include a group of sensors such as a gyro sensor, a geomagnetic sensor, and an air pressure sensor. The data interface 926 is connected to the in-vehicle network 941 via a terminal device (not shown), for example, and acquires data generated on a vehicle side such as vehicle speed data.

The content player 927 plays a content stored in a storage medium (for example, CD or DVD) inserted into the storage medium interface 928. The input device 929 includes, for example, a touch sensor that detects a touch on a screen of the display device 930, a button, a switch, or the like and receives an operation or information input from a user. The display device 930 has a screen such as an LCD or an OLED display, and displays a navigation function or an image of a content to be played. The speaker 931 outputs the navigation function or the audio of the content to be played.

The wireless communication interface 933 supports one of cellular communication systems such as LTE and LTE-Advanced, and executes wireless communication. The wireless communication interface 933 may typically include a BB processor 934, an RF circuit 935, and the like. The BB processor 934 may perform, for example, encoding/decoding, modulation/demodulation, multiplexing/demultiplexing, and perform various signal processing for wireless communication. On the other hand, the RF circuit 935 may include a mixer, a filter, an amplifier, and the like, and transmits and receives a wireless signal via the antenna 937. The wireless communication interface 933 may be a one-chip module in which the BB processor 934 and the RF circuit 935 are integrated. The wireless communication interface 933 may include the plurality of BB processors 934 and the plurality of RF circuits 935 as illustrated in FIG. 28. Although FIG. 28 illustrates an example in which the wireless communication interface 933 includes the plurality of BB processors 934 and the plurality of RF circuits 935, the wireless communication interface 933 includes a single BB processor 934 or a single RF circuit 935.

Further, the wireless communication interface 933 may support other types of wireless communication schemes such as a short-range wireless communication scheme, a close-range wireless communication scheme, or a wireless LAN scheme, in addition to the cellular communication method, and in this case, may include the BB processor 934 and the RF circuit 935 for each wireless communication system.

Each of the antenna switches 936 switches a connection destination of the antenna 937 among a plurality of circuits (for example, circuits for different wireless communication schemes) included in the wireless communication interface 933.

Each antenna 937 has a single or a plurality of antenna elements (for example, a plurality of antenna elements forming a MIMO antenna), and is used by the wireless communication interface 933 to transmit and receive a wireless signal. The car navigation device 920 may have the plurality of antennas 937 as illustrated in FIG. 28. Although FIG. 28 illustrates an example in which the car navigation device 920 has the plurality of antennas 937, the car navigation device 920 may have the single antenna 937.

Furthermore, the car navigation device 920 may include the antenna 937 for each wireless communication scheme. In that case, the antenna switch 936 may be omitted from the configuration of the car navigation device 920.

The battery 938 supplies power to each block of the car navigation device 920 illustrated in FIG. 28 via a power supply line partially indicated by a broken line in the drawing. In addition, the battery 938 stores power supplied from the vehicle side.

In the car navigation device 920 illustrated in FIG. 28, one or more components (at least any one of the communication control unit 241, the information acquisition unit 243, the selection unit 245, and the notification unit 247) included in the processing unit 240 described with reference to FIG. 3 may be mounted in the wireless communication interface 933. Alternatively, at least some of these components may be mounted in the processor 921. As an example, the car navigation device 920 includes a module that includes some (for example, BB processor 934) or all of the wireless communication interfaces 933 and/or the processor 921, and the module may include the one or more components. In this case, the module may store a program (in other words, a program for allowing the processor to execute the operations of the one or more components) for allowing the processor to function as the one or more components, and execute the program. As another example, the program for allowing the processor to function as the one or more components is installed in the car navigation device 920, and the wireless communication interface 933 (for example, BB processor 934) and/or the processor 921 may execute the program. As described above, as a device including the one or more components, the car navigation device 920 or the module may be provided, and the program for allowing the processor to function as the one or more components may be provided. Further, a readable recording medium on which the program is recorded may be provided.

In addition, in the car navigation device 920 illustrated in FIG. 28, for example, the wireless communication unit 220 described with reference to FIG. 3 may be mounted in the wireless communication interface 933 (for example, RF circuit 935). Further, the antenna unit 210 may be mounted in the antenna 937. Further, the storage unit 230 may be mounted in the memory 922.

Further, the technology according to the present disclosure may be implemented as an in-vehicle system (or vehicle) 940 that includes one or more blocks of the above-described car navigation device 920, an in-vehicle network 941, and a vehicle-side module 942. That is, the in-vehicle system (or vehicle) 940 may be provided as a device including at least one of the communication control unit 241, the information acquisition unit 243, the selection unit 245, and the notification unit 247. The vehicle-side module 942 generates vehicle-side data such as vehicle speed, engine speed, or failure information, and outputs the generated data to the in-vehicle network 941.

### <<5. Conclusion>>

As described above, in the communication system according to the embodiment of the present disclosure, the terminal device 200 notifies the base station 100 of the information on the available second beam (back up beam) in place of the first beam (that is, main beam) preferentially used in the wireless communication with the base station 100 among the plurality of beams. In addition, the base station 100 controls the wireless communication with the terminal device 200 based on the information on the second beam notified from the terminal device 200. As a specific example, the base station 100 registers the second beam in advance, and recovers the wireless communication using the second beam when the wireless communication with the terminal device 200 is interrupted due to the blocking or the like.

With the above configuration, according to the communication system according to the present embodiment, even when the wireless communication with the terminal device 200 is interrupted due to the blocking or the like, the wireless communication can be quickly performed without performing the beam sweeping again. That is, according to the communication system according to the present embodiment, it is possible to further shorten the time required for recovery (that is, beam recovery) of the wireless communication between the base station 100 and the terminal device 200, and to improve the throughput of the entire system. Further, according to the communication system according to the present embodiment, it is possible to recover the wireless communication between the base station 100 and the terminal device 200 with less resources.

Hereinabove, the preferred embodiments of the present disclosure have been described in detail with reference to the accompanying drawings, but the technical scope of the present disclosure is not limited to such examples. It will be apparent to those skilled in the art of the present disclosure that various changes or modifications can be conceived within the scope of the technical idea described in the claims, and it is naturally understood that these changes or modifications fall within the technical scope of the present disclosure.

In addition, the effects described in the present specification are merely illustrative or exemplary, and are not limited to those described in the present specification. That is, the technology according to the present disclosure can exhibit other effects apparent to those skilled in the art from the description of the present specification, in addition to or instead of the effects described above.

The following configurations are also within the technical scope of the present disclosure.
(1) A communication device, comprising:
   a communication unit that performs wireless communication; and
   a notification unit that notifies a base station of information on an available second beam in place of a first beam preferentially used in the wireless communication with the base station among a plurality of beams.
(2) The communication device according to (1), wherein the notification unit notifies the base station of information on one or more groups each including one or more of the second beams as the information on the second beam.
(3) The communication device according to (1), further comprising: a selection unit that selects at least some of the plurality of beams as the second beam according to a correlation with the first beam,
   wherein the notification unit notifies the base station of the information on the selected second beam.
(4) The communication device according to (3), wherein when the selection unit receives a beam transmitted from the base station, the selection unit selects the second beam having a lower correlation with the first beam.
(5) The communication device according to (3) or (4), wherein when the base station transmits the beam, the selection unit selects the second beam having a lower correlation with the first beam.
(6) The communication device according to (5), wherein when the base station transmits the beam, the selection unit selects the second beam having a lower correlation with the first beam based on the information notified from the base station for the beam transmitted from the base station.
(7) The communication device according to any one of (1) to (6), wherein the notification unit notifies the base station of the information on the second beam common to a plurality of frequency bands used for the wireless communication with the base station.
(8) The communication device according to any one of (1) to (6), wherein the notification unit notifies the base station of the information on the second beam for each of a plurality of frequency bands used for the wireless communication with the base station.
(9) The communication device according to (8), wherein the notification unit sets priority between the plurality of frequency bands and notifies the base station of information on the priority.
(10) The communication device according to any one of (7) to (9), wherein each of the plurality of frequency bands is a partial second frequency band to which at least a part of a first frequency band having a wider bandwidth than the frequency band is assigned.
(11) The communication device according to any one of (1) to (10), wherein the notification unit requests the base station to recover the wireless communication with the base station according to a state of the first beam.
(12) The communication device according to (11), wherein the request includes information on each of one or more frequency bands used for the wireless communication with the base station.
(13) A communication device, comprising:
   a communication unit that performs wireless communication;
   an acquisition unit that acquires, from the terminal device, information on an available second beam in place of a first beam preferentially used in the wireless communication with the terminal device among a plurality of beams; and
   a control unit that controls the wireless communication with the terminal device based on the acquired information on the second beam.
(14) The communication device according to (13), further comprising: a notification unit that instructs the terminal device to notify the information on the second beam,
   wherein when the notification of the information on the second beam is given to the terminal device, the acquisition unit acquires the information from the terminal device.
(15) The communication device according to (13) or (14), wherein the acquisition unit acquires, from the terminal device,
   first information on the second beam having a lower correlation with the first beam when the terminal device receives a transmitted beam, and
   second information on the second beam having a lower correlation with the first beam when the beam is transmitted to the terminal device, and
   the control unit controls the wireless communication with the terminal device based on the first information and the second information.
(16) The communication device according to (15), wherein the control unit attempts to recover the wireless communication with the terminal device in response to a request from the terminal device based on at least one of the second beam corresponding to the first information and the second beam corresponding to the second information.
(17) The communication device according to any one of (13) to (16), wherein the acquisition unit acquires, from the terminal device, the information on the second beam common to a plurality of frequency bands used for the wireless communication with the terminal device, and
   the control unit controls the wireless communication with the terminal device using at least one of a plurality of frequency bands based on the acquired information on the second beam.
(18) The communication device according to any one of (13) to (16), wherein the acquisition unit acquires, from the terminal device, the information on the second beam for each of a plurality of frequency bands used for the wireless communication with the terminal device, and
   the control unit controls the wireless communication with the terminal device based on the information on the second beam for each frequency band.
(19) The communication device according to (18), wherein the acquisition unit acquires, from the terminal device, information on priority set between the plurality of frequency bands used for the wireless communication with the terminal device, and
   the control unit controls the wireless communication with the terminal device based on the information on the priority.
(20) The communication device according to (18), further comprising: a notification unit that notifies the terminal device of the information on the priority set between the plurality of frequency bands used for the wireless communication with the terminal device,
   wherein the control unit controls the wireless communication with the terminal device based on the information on the priority.
(21) A communication method allowing a computer to execute the following steps:
   performing wireless communication; and
   notifying a base station of information on an available second beam in place of a first beam preferentially used in the wireless communication with the base station among a plurality of beams.
(22) A communication method allowing a computer to execute the following steps:
   performing wireless communication;
   acquiring, from a terminal device, information on an available second beam in place of a first beam preferentially used in the wireless communication with the terminal device among a plurality of beams; and
   controlling the wireless communication with the terminal device based on the acquired information on the second beam.
(23) A program allowing a computer to execute the following operations:
   performing wireless communication; and
   notifying a base station of information on an available second beam in place of a first beam preferentially used in the wireless communication with the base station among a plurality of beams.
(24) A program allowing a computer to execute the following operations:
   performing wireless communication;
   acquiring, from a terminal device, information on an available second beam in place of a first beam preferentially used in the wireless communication with the terminal device among a plurality of beams; and
   controlling the wireless communication with the terminal device based on the acquired information on the second beam.

### Reference Signs List

- 1: SYSTEM
- 100: BASE STATION
- 110: ANTENNA UNIT
- 120: WIRELESS COMMUNICATION UNIT
- 130: NETWORK COMMUNICATION UNIT
- 140: STORAGE UNIT
- 150: PROCESSING UNIT
- 151: COMMUNICATION CONTROL UNIT
- 153: INFORMATION ACQUISITION UNIT
- 155: NOTIFICATION UNIT
- 200: TERMINAL DEVICE
- 210: ANTENNA UNIT
- 220: WIRELESS COMMUNICATION UNIT
- 230: STORAGE UNIT
- 240: PROCESSING UNIT
- 241: COMMUNICATION CONTROL UNIT
- 243: INFORMATION ACQUISITION UNIT
- 245: SELECTION UNIT
- 247: NOTIFICATION UNIT

## Claims

1. A communication device, comprising:
a communication unit that performs wireless communication; and
a notification unit that notifies a base station of information on an available second beam in place of a first beam preferentially used in the wireless communication with the base station among a plurality of beams.

2. The communication device according to claim 1, wherein the notification unit notifies the base station of information on one or more groups each including one or more of the second beams as the information on the second beam.

3. The communication device according to claim 1, further comprising: a selection unit that selects at least some of the plurality of beams as the second beam according to a correlation with the first beam,
wherein the notification unit notifies the base station of the information on the selected second beam.

4. The communication device according to claim 3, wherein when the selection unit receives a beam transmitted from the base station, the selection unit selects the second beam having a lower correlation with the first beam.

5. The communication device according to claim 3, wherein when the base station transmits the beam, the selection unit selects the second beam having a lower correlation with the first beam.

6. The communication device according to claim 5, wherein when the base station transmits the beam, the selection unit selects the second beam having a lower correlation with the first beam based on the information notified from the base station for the beam transmitted from the base station.

7. The communication device according to claim 1, wherein the notification unit notifies the base station of the information on the second beam common to a plurality of frequency bands used for the wireless communication with the base station.

8. The communication device according to claim 1, wherein the notification unit notifies the base station of the information on the second beam for each of a plurality of frequency bands used for the wireless communication with the base station.

9. The communication device according to claim 8, wherein the notification unit sets priority between the plurality of frequency bands and notifies the base station of information on the priority.

10. The communication device according to claim 7, wherein each of the plurality of frequency bands is a partial second frequency band to which at least a part of a first frequency band having a wider bandwidth than the frequency band is assigned.

11. The communication device according to claim 1, wherein the notification unit requests the base station to recover the wireless communication with the base station according to a state of the first beam.

12. The communication device according to claim 11, wherein the request includes information on each of one or more frequency bands used for the wireless communication with the base station.

13. A communication device, comprising:
a communication unit that performs wireless communication;
an acquisition unit that acquires, from the terminal device, information on an available second beam in place of a first beam preferentially used in the wireless communication with the terminal device among a plurality of beams; and
a control unit that controls the wireless communication with the terminal device based on the acquired information on the second beam.

14. The communication device according to claim 13, further comprising: a notification unit that instructs the terminal device to notify the information on the second beam,
wherein when the notification of the information on the second beam is given to the terminal device, the acquisition unit acquires the information from the terminal device.

15. The communication device according to claim 13, wherein the acquisition unit acquires, from the terminal device,
first information on the second beam having a lower correlation with the first beam when the terminal device receives a transmitted beam, and
second information on the second beam having a lower correlation with the first beam when the beam is transmitted to the terminal device, and
the control unit controls the wireless communication with the terminal device based on the first information and the second information.

16. The communication device according to claim 15, wherein the control unit attempts to recover the wireless communication with the terminal device in response to a request from the terminal device based on at least one of the second beam corresponding to the first information and the second beam corresponding to the second information.

17. The communication device according to claim 13, wherein the acquisition unit acquires, from the terminal device, the information on the second beam common to a plurality of frequency bands used for the wireless communication with the terminal device, and
the control unit controls the wireless communication with the terminal device using at least one of a plurality of frequency bands based on the acquired information on the second beam.

18. The communication device according to claim 13, wherein the acquisition unit acquires, from the terminal device, the information on the second beam for each of a plurality of frequency bands used for the wireless communication with the terminal device, and
the control unit controls the wireless communication with the terminal device based on the information on the second beam for each frequency band.

19. The communication device according to claim 18, wherein the acquisition unit acquires, from the terminal device, information on priority set between the plurality of frequency bands used for the wireless communication with the terminal device, and
the control unit controls the wireless communication with the terminal device based on the information on the priority.

20. The communication device according to claim 18, further comprising: a notification unit that notifies the terminal device of the information on the priority set between the plurality of frequency bands used for the wireless communication with the terminal device,
wherein the control unit controls the wireless communication with the terminal device based on the information on the priority.

21. A communication method allowing a computer to execute the following steps:
performing wireless communication; and
notifying a base station of information on an available second beam in place of a first beam preferentially used in the wireless communication with the base station among a plurality of beams.

22. A communication method allowing a computer to execute the following steps:
performing wireless communication;
acquiring, from a terminal device, information on an available second beam in place of a first beam preferentially used in the wireless communication with the terminal device among a plurality of beams; and
controlling the wireless communication with the terminal device based on the acquired information on the second beam.

23. A program allowing a computer to execute the following operations:
performing wireless communication; and
notifying a base station of information on an available second beam in place of a first beam preferentially used in the wireless communication with the base station among a plurality of beams.

24. A program allowing a computer to execute the following operations:
performing wireless communication;
acquiring, from a terminal device, information on an available second beam in place of a first beam preferentially used in the wireless communication with the terminal device among a plurality of beams; and
controlling the wireless communication with the terminal device based on the acquired information on the second beam.
